# EUROPÄISCHE PATENTSCHRIFT

(11) **EP 3 732 539 B1**
(45) Veröffentlichungstag und Bekanntmachung des Hinweises auf die Patenterteilung: **22.07.2026**
(21) Anmeldenummer: 18826042.6
(22) Anmeldetag: 20.12.2018
(51) Int. Cl.: G05B 19/4065, G05B 19/418, B23D 59/00, B27B 5/065

(54) **VERFAHREN ZUM BEARBEITEN VON WERKSTÜCKEN, SOWIE WERKZEUGMASCHINE**
METHOD FOR MACHINING WORKPIECES AND MACHINE TOOL
PROCÉDÉ D'USINAGE DE PIÈCES ET MACHINE-OUTIL

(30) Priorität: 28.12.2017 DE 102017131372; 28.12.2017 DE 102017131373
(43) Veröffentlichungstag der Anmeldung: 04.11.2020
(73) Patentinhaber: HOMAG Plattenaufteiltechnik GmbH, 75365 Calw (DE)
(72) Erfinder: MARTYNENKO, Sergey, 71083 Herrenberg (DE)
(74) Vertreter: DREISS Patentanwälte PartG mbB
(86) Internationale Anmeldenummer: PCT/EP2018/086296
(87) Internationale Veröffentlichungsnummer: WO 2019/129655

(56) Entgegenhaltungen:
- WO-A1-2016/065491
- DE-A1- 102014 104 581
- DE-A1- 19 808 565
- US-A1- 2008 161 959
- US-A1- 2010 106 278
- US-B1- 6 954 883
- US-B1- 7 277 824
- "Review of Sensor Applications in Tool Condition Monitoring in Machining", 1 January 2014, ISBN: 978-0-08-096533-8, article M.S.H. BHUIYAN ET AL: "Review of Sensor Applications in Tool Condition Monitoring in Machining", pages: 539 - 569, XP055582263, DOI: 10.1016/B978-0-08-096532-1.01330-3

## Beschreibung

Die Erfindung betrifft ein Verfahren zum Bearbeiten von Werkstücken gemäß dem Oberbegriff des Anspruchs 1 sowie eine Werkzeugmaschine gemäß dem Oberbegriff des nebengeordneten Patentanspruchs.

Ein Verfahren der eingangs genannten Art sowie eine Werkzeugmaschine sind aus der DE 10 2013 204 409 A1 bekannt. Die bekannte Werkzeugmaschine ist eine Plattenbearbeitungsanlage in Form einer Aufteilsäge. Auf einem Zuführtisch liegende plattenförmige Werkstücke oder Werkstückstapel werden programmgesteuert einer Sägeeinrichtung zugeführt, die auf einem Sägewagen angeordnet ist. Der Sägewagen ist quer zur Vorschubrichtung des Programmschiebers bewegbar. Die Sägeeinrichtung ist als Kreissäge ausgebildet mit einem entsprechenden Antrieb, der ein Kreissägeblatt in eine Drehbewegung versetzt.

Vom Markt her sind noch andere Werkzeugmaschinen in Form von Plattenbearbeitungsanlagen zur Bearbeitung von plattenförmigen Werkstücken bekannt. Hierzu gehören beispielsweise sogenannte "Nestingmaschinen", bei denen das plattenförmige Werkstück beispielsweise mit Fräseinrichtungen und/oder Bohreinrichtungen bearbeitet wird.

Bei den bekannten Verfahren und Werkzeugmaschinen wird nach einer Bearbeitung des Werkzeugs durch einen Bearbeitungsvorgang ein Qualitätsmerkmal an dem bearbeiteten Werkstück ermittelt, welches aus dem Bearbeitungsvorgang an dem Werkstück resultiert. Beispielsweise wird dieses Qualitätsmerkmal durch eine Sichtinspektion einer bei der Bearbeitung hergestellten Kante ermittelt.

Ferner sind verschiedene Verfahren und Vorrichtungen zur Ermittlung eines Werkzeugverschleißes bekannt. Beispiele hierfür sind die DD 239 369 A1, die DD 244 282 A3, die DE 10 2012 106 139 B4, die DD 250 885 A1, die DE 102 06 615 B4 und die DE 10 2015 213 392 A1. Bei der DE 10 2014 104 581 A1 wird ein Werkzeug mittels einer Kamera beobachtet und dann, wenn hieraus auf ein fehlerhaftes Werkzeug geschlossen wurde, auf eine eventuell fehlerhafte bearbeitete Oberfläche des Werkstücks geschlossen. Die US 2008/0161959 A1 betrifft ein Verfahren zum großen messen des Werkzeugverschleißes aus Parametern eines Prozessmodells. Die DE 198 08 565 A1 betrifft ein Verfahren zur Verschleißüberwachung eines Werkzeugs bei der Bearbeitung von Werkstücken. Dabei wird mittelbar aus der Bearbeitungsqualität auf den Verschleiß geschlossen. MSH Bhuiyan, IA Choudhury, Review of Sensor Applications in Tool Condition Monitoring in Machining, Comprehensive Materials Processing, Volume 13, 2014, XP055582263, Seiten 539-569, offenbart an einer Stelle verschiedene Möglichkeiten zur optischen Erfassung eines Werkzeugzustands und an einer anderen Stelle zur Erfassung einer Oberflächenrauigkeit.

Die US 6 954 883 B1 beschreibt bei der Herstellung von Halbleiter-Wafern die Erfassung von metrologischen Daten, Werkzeugzustandsdaten und Prozesszustandsdaten. Die US 7 277 824 B1 beschreibt ein Verfahren und eine Vorrichtung zur Fehlerklassifizierung bei Halbleiter-Wafern. Auch in der US 2010/0106278 A1 geht es um die Herstellung von Halbleiter-Wafern und die Erfassung verschiedener Daten, unter anderem von metrologischen Daten.

Aufgabe der vorliegenden Erfindung ist es, ein Verfahren zum Bearbeiten von Werkstücken bereitzustellen, welches im geschlossen wurde, auf eine eventuell fehlerhafte bearbeitete Oberfläche des Werkstücks geschlossen. Die US 2008/0161959 A1 betrifft ein Verfahren zum großen messen des Werkzeugverschleißes aus Parametern eines Prozessmodells. Die DE 198 08 565 A1 betrifft ein Verfahren zur Verschleißüberwachung eines Werkzeugs bei der Bearbeitung von Werkstücken. Dabei wird mittelbar aus der Bearbeitungsqualität auf den Verschleiß geschlossen. MSH Bhuiyan, IA Choudhury, Review of Sensor Applications in Tool Condition Monitoring in Machining, Comprehensive Materials Processing, Volume 13, 2014, XP055582263, Seiten 539-569, offenbart an einer Stelle verschiedene Möglichkeiten zur optischen Erfassung eines Werkzeugzustands und an einer anderen Stelle zur Erfassung einer Oberflächenrauigkeit.

Aufgabe der vorliegenden Erfindung ist es, ein Verfahren zum Bearbeiten von Werkstücken bereitzustellen, welches im realen Betrieb ein optimales Bearbeitungsergebnis an dem bearbeiteten Werkstück erzeugt. Ferner ist es die Aufgabe der Erfindung, eine entsprechende Werkzeugmaschine bereitzustellen.

Die gestellte Aufgabe wird durch ein Verfahren mit den Merkmalen des Anspruchs 1 gelöst, sowie durch eine Plattenaufteilanlage mit den Merkmalen des nebengeordneten Anspruchs. Darüber hinaus sind vorteilhafte Weiterbildungen der Erfindung in abhängigen Ansprüchen angegeben. Für die Erfindung wesentliche Merkmale finden sich darüber hinaus in der nachfolgenden Beschreibung und in der beigefügten Zeichnung. Dabei können diese Merkmale sowohl in Alleinstellung als auch in unterschiedlichen Kombinationen für die Erfindung wesentlich sein, ohne dass hierauf im Einzelnen nochmals explizit hingewiesen werden wird.

Bei dem erfindungsgemäßen Verfahren zum Bearbeiten von Werkstücken wird ein Ausgangswerkstück mittels eines Werkzeugs einer Werkzeugmaschine bearbeitet. Bei einer solchen Werkzeugmaschine kann es sich beispielsweise um eine Vorrichtung zur Bearbeitung von plattenförmigen Werkstücken handeln, insbesondere um eine Plattenaufteilanlage bzw. eine Plattenaufteilsäge. Ferner wird an dem bearbeiteten Werkstück ein Wert eines aus dem Bearbeitungsvorgang resultierenden Qualitätsmerkmals ermittelt. Die Ermittlung eines solchen Qualitätsmerkmals Erfindungsgemäß wird vorgeschlagen, dass ein Wert einer Größe, die einen Zustand des Werkzeugs charakterisiert, während des Bearbeitungsvorgangs und/oder vor und/oder nach dem Bearbeitungsvorgang ermittelt wird, und dass ein Datensatz erstellt und in einem Speicher abgespeichert wird, der mindestens den Wert des Qualitätsmerkmals und den Wert der Größe, die den Zustand des Werkzeugs charakterisiert, miteinander verknüpft. Die erfindungsgemäße Werkzeugmaschine zeichnet sich dadurch aus, dass sie eine Steuer- und Regeleinrichtung mit einem Prozessor und einem Speicher umfasst, welche zur Ausführung des obigen Verfahrens ausgebildet ist.

Die erfindungsgemäßen Maßnahmen ermöglichen es einem Benutzer, einen Werkzeugwechsel rechtzeitig zu planen und Fehlproduktionen zu vermeiden. Hierdurch wird die Effizienz des Betriebs der Werkzeugmaschine verbessert. Darüber hinaus gestattet es die Erfindung, Änderungen der Werkzeugzustände bei unterschiedlichen Bearbeitungsvorgängen miteinander zu vergleichen und auf diese Weise Zusammenhänge zwischen den Merkmalen des Werkzeugzustandes und der Bearbeitungsqualität festzustellen. Dies kann wiederum für eine indirekte Kontrolle der Bearbeitungsqualität sowie für die Sicherung der Bearbeitungsqualität genutzt werden. Das erfindungsgemäße Verfahren und die erfindungsgemäße Werkzeugmaschine ermöglichen es somit, sehr effizient eine hohe Bearbeitungsqualität sicherzustellen. Der ermittelte Zustand des Werkzeugs bzw. die messbaren Merkmale des Werkzeugverschleißes (beispielsweise Fase am Schneidkeil, Winkel, Abnutzungsbereich) können dem ermittelten Qualitätsmerkmal des Werkstücks und dem entsprechenden Bearbeitungsprozess zugeordnet werden. Diese Informationen bieten die Möglichkeit, den Bearbeitungsvorgang im Hinblick auf Qualität, Werkzeugkosten und Produktivität mittels eines Prozessmodells und/oder abgespeicherter Datensätze zu optimieren, wie weiter unten noch dargelegt werden wird.

Erfindungsgemäß umfasst das Verfahren ferner folgende Schritte:
**a.** Ermitteln oder Erfassen eines Werts einer Größe, die den Bearbeitungsvorgang charakterisiert und des Werts einer Größe, die eine Eigenschaft eines Werkzeugs, welches für den Bearbeitungsvorgang eingesetzt wurde, charakterisiert, und des Werts einer Größe, die eine Eigenschaft des Werkstücks charakterisiert;
b. Erstellen und Abspeichern des Datensatzes derart, dass er zusätzlich den Wert der Größe, die den Bearbeitungsvorgang charakterisiert, und den Wert der Größe, die eine Eigenschaft des Werkzeugs charakterisiert, und den Wert der Größe, die eine Eigenschaft des Werkstücks charakterisiert, mit dem Wert des aus dem Bearbeitungsvorgang an dem bearbeiteten Werkstück resultierenden Qualitätsmerkmals und dem Wert der Größe, die einen Zustand des Werkzeugs charakterisiert, verknüpft.

Dies ist deshalb besonders vorteilhaft, weil hierdurch ein einen konkreten Bearbeitungsvorgang beschreibender Datensatz ("Prozessdatensatz") erstellt wird, durch den bestimmte Prozessparameter mit der bei diesen Prozessparametern erzielten Qualität verknüpft werden, wodurch eine nachvollziehbare Dokumentation des Bearbeitungsvorgangs erhalten wird, was wiederum eine Optimierung des Prozesses, also des Bearbeitungsvorgangs, im Hinblick auf einen oder mehrere Prozessparameter ermöglicht, wie weiter unten noch dargelegt werden wird.

Nach einer Mehrzahl von Bearbeitungsvorgängen liegt nämlich auch eine Mehrzahl von Prozessdatensätzen vor, die eventuell die Erstellung eines Prozessmodells gestattet. Bei einem solchen Prozessmodell kann es sich beispielsweise um einen Algorithmus handeln, welcher die empirischen Zusammenhänge zwischen den Prozessparametern und der erzielten Qualität abbildet.

Je größer die Anzahl der vorhandenen Prozessdatensätze ist, desto genauer kann der Algorithmus die besagten Zusammenhänge abbilden. Dies gestattet es dann, beispielsweise bei einem vorgegebenen Werkzeug, einem vorgegebenen Werkstück, einem ermittelten Werkzeugzustand und einer gewünschten Qualität, die anderen Prozessparameter vorab so einzustellen, dass bei dem dann mit diesen Prozessparametern durchgeführten Bearbeitungsvorgang die gewünschte Qualität erreicht wird. In diesem beispielhaften Fall wäre also die "gewünschte Qualität" die Zielgröße. Andere mögliche Zielgrößen wären beispielsweise der Durchsatz, also die Anzahl der bearbeiteten Werkstücke pro Zeiteinheit oder eine Bearbeitungsstrecke pro Zeiteinheit, oder die Werkzeugstandzeit, also die Anzahl der Bearbeitungsvorgänge bzw. der zurückgelegte Weg der Werkzeugschneide im Material, bis das Werkzeug verschleißbedingt gewechselt werden muss.

Es wird also durch dieses Verfahren die Basis bereitet für einen Wissenstransfer von früheren Bearbeitungsvorgängen auf einen künftig konkret vorgesehenen Bearbeitungsvorgang. Die optimalen Prozessparameter und die optimalen Werkzeuge werden sehr schnell auffindbar gemacht, wodurch bei künftigen Bearbeitungsvorgängen beispielsweise bei häufigen Materialwechseln eine erhebliche Zeitersparnis und damit eine Erhöhung der Produktivität ermöglicht werden. Ferner wird auch die Genauigkeit der Dokumentation des Betriebs der Werkzeugmaschine verbessert, was die Einstellung der Werkzeugmaschine bei der Bearbeitung von ganz bestimmten Materialien oder Einsatz-Szenarios vereinfacht. Auch wird auf diese Weise Anforderungen des Qualitätsmanagements genüge getan.

Es versteht sich, dass der Begriff "ermitteln" sehr breit zu verstehen ist. Möglich ist beispielsweise, dass die entsprechenden Werte der Größen unmittelbar mittels eines Sensors erfasst werden. Hierfür kommen beispielsweise Technologien der Bilderkennung infrage. Möglich ist aber auch, dass die entsprechenden Werte der Größen von einer Bedienperson visuell erfasst und dann mittels einer Eingabeeinrichtung eingegeben werden. Möglich ist auch, dass beispielsweise eine Identifikationsnummer des Werkzeugs und/oder des Werkstücks ermittelt oder erfasst wird, und aus dieser dann anhand einer Datenbank, auf die beispielsweise über das Internet zugegriffen wird, der eigentlich interessierende Wert der Größe ermittelt wird. Möglich ist auch, dass einzelne der erhobenen erwähnten Größen aus vorgegebenen Steuersignalen ermittelt werden können. Beispielsweise kann das Qualitätsmerkmal und/oder der Wert der Größe, die den Bearbeitungsvorgang charakterisiert und/oder der Wert der Größe, die eine Eigenschaft des Werkzeugs charakterisiert und/oder der Wert der Größe, die eine Eigenschaft des Werkstücks charakterisiert durch eine Bedienperson mittels einer Eingabeeinrichtung eingegeben und/oder mittels einer Bilderkennungseinrichtung und/oder mittels einer vorzugsweise berührungslosen Sensoreinrichtung erfasst werden. Weiterhin ist es möglich, einige der oben genannten Größen aus einem Produktionsplanungssystem, einer Maschinensteuerung und/oder einem Werkzeugverwaltungssystem zu gewinnen.

Das erfindungsgemäße Verfahren zeichnet sich ferner dadurch aus, dass in dem Speicher eine Mehrzahl von Datensätzen abgespeichert werden, und dass aus der Mehrzahl von abgespeicherten Datensätze ein Prozessmodell ermittelt wird. Wie bereits oben erläutert wurde, gestattet dies, beispielsweise bei einem vorgegebenen Werkzeug, einem bekannten aktuellen Werkzeugzustand, einem bekannten Werkstück und einer gewünschten Qualität, die anderen Prozessparameter (beispielsweise jene, welche den Bearbeitungsvorgang charakterisieren) vorab so einzustellen, dass bei dem dann mit diesen Prozessparametern durchgeführt ersten Bearbeitungsvorgang die gewünschte Qualität erreicht wird.

Ferner wird auf der Basis des ermittelten Werts der Größe, die den aktuellen Zustand des Werkzeugs charakterisiert, und eines vorgegebenen Werts der Größe, die einen vorgesehenen Bearbeitungsvorgang charakterisiert, mindestens ein optimaler Prozessparameter ermittelt. Auf diese Weise wird das eingesetzte Werkzeug optimal ausgenutzt, wodurch die Betriebskosten der Werkzeugmaschine reduziert werden.

Der Prozessparameter ist mindestens einer aus der folgenden Gruppe: Drehgeschwindigkeit des Werkzeugs; Vorschubgeschwindigkeit des Werkzeugs; Verlauf einer Drehgeschwindigkeit des Werkzeugs; Verlauf einer Vorschubgeschwindigkeit des Werkzeugs; Arbeitsposition des Werkzeugs in Bezug auf das zu bearbeitende Werkstück; Arbeitsposition des zu bearbeitenden Werkstücks; eine Fertigungsreihenfolge von Schnittplänen in einem Arbeitsauftrag; eine Reihenfolge von Bearbeitungsaufträgen von unterschiedlichen Materialien. Bei letzterem können solche Materialien, welche empfindliche Oberflächen aufweisen, vorzugsweise mit einem eher neuen Werkzeug bearbeitet werden, wohingegen Materialien mit eher empfindlichen Oberflächen auch mit einem eher abgestumpften Werkzeug bearbeitet werden können. Diese Größen können mittels geeigneter Sensoren sehr einfach erfasst oder auf der Basis von vorgegebenen Steuersignalen, von Produktionsdaten und/oder eines Bearbeitungsprogramms für das Werkstück sehr einfach ermittelt bzw. vorgegeben werden.

Eine Weiterbildung des erfindungsgemäßen Verfahrens zeichnet sich dadurch aus, dass der Wert der Größe, die einen Werkzeugzustand charakterisiert, mindestens einer ist aus der folgenden Gruppe: ein optisches Bild mindestens eines Bereichs des Werkzeugs; ein Qualitätsmerkmal des Werkzeugs, insbesondere einer Werkzeugschneide, beispielsweise eine Verschleißfase, eine Beschädigung einer Schneide, eine Schneidengeometrie, ein Schneidenwinkel, ein Schneidenprofil, eine Verschmutzung, bzw. davon abgeleitete quantitative Merkmale bzw. Größen. Dies sind wichtige und gut zu erfassende Parameter, die den Werkzeugzustand sinnvoll beschreiben. Man erkennt also, dass der Begriff "Wert" im vorliegenden Fall ebenfalls sehr breit zu verstehen ist und nicht nur im strengen numerischen bzw. alphanumerischen Sinne zu verstehen ist, sondern auch eher qualitative Informationen, wie beispielsweise ein optisches Bild, umfasst.

Eine Weiterbildung des erfindungsgemäßen Verfahrens zeichnet sich ferner dadurch aus, dass das aus dem Bearbeitungsvorgang resultierende Qualitätsmerkmal mindestens eines aus der folgenden Gruppe ist: optische Qualität der bearbeiten Werkstückfläche; Rauheit der bearbeiteten Werkstückfläche; optische Qualität einer zur bearbeiteten Werkstückfläche benachbarten Werkstückfläche; optische Qualität einer durch die bearbeitete Werkstückfläche und eine benachbarte Werkstückfläche gebildeten Kante; Genauigkeit der Lage der bearbeiteten Werkstückfläche, sowie davon abgeleitete quantitative Größen.

Die "optische Qualität" kann beispielsweise von einer Bedienperson im Rahmen einer Sichtinspektion ermittelt werden und kann dann von der Bedienperson einem von mehreren vorgegebenen Qualitätswerten zugeordnet werden, beispielsweise, im einfachsten Fall, den beiden vorgegebenen Qualitätswerten "gut" und "nicht gut". Möglich sind aber auch feinere Abstufungen, beispielsweise in Form von Noten oder Punkten.

Möglich ist auch, dass mehrere Qualitätsmerkmale erfasst werden, und dass aus diesen beispielsweise nach einem vorgegebenen Gewichtungsschlüssel ein Gesamt-Qualitätsmerkmal ermittelt wird, welches dann dem Datensatz zugeordnet wird. Die optische Qualität einer zur bearbeiteten Werkstückfläche benachbarten Werkstückfläche bzw. einer hierbei gebildeten Kante, beispielsweise einer Schnittkante, kann beispielsweise durch Anzahl sowie Größe sogenannter "Ausreißer" quantifiziert werden. Auch eine dort festgestellte "Welligkeit" kann ein Qualitätskriterium sein. Auch die Rauheit der bearbeiteten Werkstückfläche bzw. der gebildeten Kante, beispielsweise der Schnittkante, kann durch die Bedienperson beispielsweise durch Überstreichen mit dem Finger ermittelt werden. Grundsätzlich denkbar ist aber auch bei allen oben angegebenen Qualitätsmerkmalen, dass diese durch Sensoren oder Bilderkennungsverfahren automatisch erfasst werden.

Weiterhin ist es möglich, einen Grenzwert für das Qualitätsmerkmal bzw. einen Werkzeugzustand (durch den also eine nicht mehr akzeptierbare Qualität bzw. ein nicht mehr akzeptierbarer Werkzeugzustand angezeigt wird) indirekt durch einen von einer Bedienperson durchgeführten Wechsel des Werkzeugs zu ermitteln.

Vorgeschlagen wird ferner, dass die den Bearbeitungsvorgang charakterisierende Größe mindestens eine aus der folgenden Gruppe ist: Drehgeschwindigkeit des Werkzeugs; Vorschubgeschwindigkeit des Werkzeugs und/oder des bearbeiteten Werkstücks; Verlauf einer Drehgeschwindigkeit des Werkzeugs; Verlauf einer Vorschubgeschwindigkeit des Werkzeugs; Arbeitsposition des Werkzeugs in Bezug auf das zu bearbeitende Werkstück; Arbeitsposition des zu bearbeitenden Werkstücks; Bearbeitungsaufgabe; Höhe eines beim Bearbeitungsvorgang bearbeiteten Werkstückstapels; eine Fertigungsreihenfolge von Schnittplänen in einem Arbeitsauftrag; Qualitätsanforderungen an das Werkstück.

Diese Größen können mittels geeigneter Sensoren sehr einfach erfasst oder auf der Basis von vorgegebenen Steuersignalen, von Produktionsdaten und/oder eines Bearbeitungsprogramms für das Werkstück sehr einfach ermittelt werden. Eine Drehgeschwindigkeit des Werkzeugs sowie eine Vorschubgeschwindigkeit des Werkzeugs und/oder des gerade in Bearbeitung befindlichen Werkstücks sind darüber hinaus wichtige Parameter, wenn nicht die wichtigsten Parameter, auf die bei späteren Bearbeitungsvorgängen zur Erzielung eines im Hinblick auf die Qualität, die Maschinenleistung und/oder die Werkzeugstandzeit optimalen Bearbeitungsergebnisses Einfluss genommen werden kann. Man erkennt im übrigen aus dieser Aufzählung, dass im Zusammenhang mit der vorliegenden Erfindung der Singular "die Größe" sowohl eine einzige solche Größe als auch eine Mehrzahl unterschiedlicher solcher Größen umfassen kann. Der Singular wurde lediglich deshalb gewählt, um die sprachliche Komplexität zu reduzieren. Dies gilt auch für die nachfolgenden beispielhaften Auflistungen anderer Typen von Größen.

Eine Weiterbildung des erfindungsgemäßen Verfahrens zeichnet sich ferner dadurch aus, dass die eine Eigenschaft des Werkzeugs charakterisierende Größe mindestens eine aus der folgenden Gruppe ist: bisherige Betriebszeit des Werkzeugs; Art des Werkzeugs; Hersteller des Werkzeugs; Schwingungsverhalten des Werkzeugs; Verlauf eines Schwingungsverhaltens des Werkzeugs; Werkzeuggeometrie; Anzahl von Schneidzähnen des Werkzeugs. Auch diese Größen können üblicherweise auf einfache Art ermittelt werden. Insbesondere aus der bisherigen Betriebszeit des Werkzeugs und deren Verknüpfung mit einem bei einem Bearbeitungsvorgang erzielten Qualitätsmerkmal lassen sich für die Zukunft Vorhersagen ableiten, wann ein Werkzeug ausgetauscht werden muss, um ein qualitativ noch akzeptables Arbeitsergebnis zu erzielen. Dabei sei an dieser Stelle darauf hingewiesen, dass der Begriff "Betriebszeit" des Werkzeugs sehr allgemein zu verstehen ist und hierunter nicht nur eine echte Zeit verstanden werden kann, sondern beispielsweise auch ein zurückgelegter Bearbeitungsweg (bei einer Säge also ein zurückgelegter Schnittweg) oder eine Gesamt-Bearbeitungsstrecke. Hierdurch kann die Werkzeugverwaltung vereinfacht werden, und die Lebensdauer eines Werkzeugs kann optimal ausgenutzt werden, ohne dass qualitativ nicht ausreichende Arbeitsergebnisse erzeugt werden.

Vorgeschlagen wird ferner, dass die eine Eigenschaft des Werkstücks charakterisierende Größe mindestens eine aus der folgenden Gruppe ist: Material des Werkstücks; Dicke des Werkstücks; Abmessungen des Werkstücks; Art des Werkstücks; Produktionsdaten des Werkstücks, beispielsweise ein Schnittplan und/oder eine Position des Werkstücks im Schnittplan, Werkstück-Identifikator. Auch diese Größen sind sehr einfach zu bestimmen und können eine erhebliche Auswirkung auf die Qualität des Bearbeitungsvorgangs haben.

Die erfindungsgemäßen Verfahren können auch dazu verwendet werden, dass aus den abgespeicherten Datensätzen eine voraussichtliche Rest-Betriebszeit des Werkzeugs ermittelt wird und/oder im Bezug auf die Bearbeitungsqualität für nachfolgende Bearbeitungen optimale Prozessparameter ermittelt werden. Auf diese Weise wird das eingesetzte Werkzeug optimal ausgenutzt, wodurch die Betriebskosten der Werkzeugmaschine reduziert werden. Die Rest-Betriebszeit des Werkzeugs kann beispielsweise ermittelt werden, indem die Gesamt-Betriebszeit, die bearbeiteten Materialien (bspw. hart bzw. weich, eventuell wiederum spezifische Materialeigenschaften wie Dichte, Zusammensetzung, Struktur, Art einer Beschichtung, eventuell auch zusammengefasst durch eine Identifikationsnummer des Materials), ein Bearbeitungsstrecke des Werkzeugs, beispielsweise ein Schnittweg einer Schneide (bei einer Säge also beispielsweise die Summe aller Schnittbögen eines Zahnes, die von einem Zahnvorschub, einer Pakethöhe und einem Sägeblattüberstand abhängig ist), den Werkzeugzustand beschreibende Größen und/oder die maximale Betriebszeit sowie weitere und/oder andere relevante Parameter in einen empirischen Algorithmus oder in ein mehrdimensionales Kennfeld eingespeist werden.

Eine Weiterbildung zeichnet sich dadurch aus, dass ein aktueller Werkzeugzustand angezeigt wird, insbesondere in Form eines aktuellen optischen Bilds mindestens eines Bereichs des Werkzeugs. Somit ist ein Benutzer jederzeit über den aktuellen Zustand des Werkzeugs informiert, und kann auch unter Verwendung seiner Erfahrung Entscheidungen treffen und Maßnahmen ergreifen. Auch kann ein Benutzer unter Verwendung der Bilddaten und auch mithilfe von sonstigen Prozessdaten aus früheren Bearbeitungsvorgängen eine erwartete Bearbeitungsqualität und/oder einen erwarteten Werkzeugzustand vorhersagen. Hierzu ist es besonders hilfreich, wenn ein Verlauf des Werkzeugzustandes angezeigt wird, insbesondere als eine Filmsequenz von erfassten optischen Bildern mindestens eines Bereichs des Werkzeugs. Durch die Anzeige der Abnutzung des Werkzeugs insbesondere in Abhängigkeit von einem Schnittweg (aufsummierte Länge einer Schneidebearbeitung bei einem Schneidwerkzeug) und/oder einer Betriebszeit kann sehr gut die Qualität des Materials des Werkstücks charakterisiert bzw. indirekt visualisiert werden. Weiterhin kann durch die erwähnte Filmsequenz von erfassten optischen Bildern beispielsweise die Verschmutzung einer Schneide des Werkzeugs bzw. ein Aufbau von Ablagerungen auf einer Schneide des Werkzeugs angezeigt werden.

Ein aktuelles optisches Bild kann beispielsweise mittels einer optischen Vorrichtung, die beispielsweise eine Kamera, insbesondere eine Infrarotkamera, umfasst, erfasst werden. Eine solche optische Vorrichtung kann beispielsweise in einem Bahnhof eines Werkzeugs, beispielsweise einer Aufteileinrichtung, angeordnet sein. Als "Bahnhof" wird hierbei im allgemeinen eine Position des Werkzeugs verstanden, in die das Werkzeug gebracht wird, wenn gerade kein Bearbeitungsvorgang stattfindet bzw. die Bearbeitung (kurz) pausiert ("Nebenzeit"), beispielsweise, um das Ausgangswerkstück neu zu positionieren. Die Position des Bahnhofs liegt üblicherweise außerhalb eines Bearbeitungsbereichs der Werkzeugmaschine. Durch die Anordnung der optischen Vorrichtung in einem solchen Bahnhof ist eine zeitneutrale Inspektion des Werkzeugs möglich, also eine Inspektion, die nicht zu einer Verzögerung der Bearbeitung des Werkstücks führt. Die Aufnahme kann also beispielsweise bei einem Stillstand des Werkzeugs bzw. bei einer reduzierten Drehzahl oder mithilfe von einem Stroboskops bei normaler Drehzahl oder ebenfalls reduzierter Drehzahl durchgeführt werden, beispielsweise dann, wenn die Werkzeugmaschine mit neuem Material beschickt wird, wenn ein Werkstück vor einer neuen Bearbeitung gehandhabt wird, beispielsweise gedreht wird, etc. Der Zustand des Werkzeugs kann somit ohne Unterbrechung der Produktion kontrolliert werden. Die optische Vorrichtung kann dabei sowohl radial als auch axial zum Werkzeug ausgerichtet sein. Grundsätzlich sind aber auch andere berührungslos arbeitende Vorrichtungen denkbar, mit denen ein Wert der Größe, die den Zustand des Werkzeugs charakterisiert, ermittelt werden kann. Hierzu gehören beispielsweise Ultraschallsensoren und/oder Infrarotsensoren und oder Lasersensoren. Die mittels Infrarotsensoren, beispielsweise einer Infrarotkamera, erfassten Bilder und Werte können einen aktuellen Abnutzungszustand des Werkzeugs beispielsweise auf der Basis einer Betriebstemperatur des Werkzeugs, von Bereichen des Werkzeugs bzw. einzelner Schneiden indirekt beschreiben.

Mittels einer solchen Einrichtung kann ein Abstumpfungsprozess des Werkzeugs und somit auch die damit verbundene Verringerung der Bearbeitungsqualität eindeutig beschrieben bzw. dargestellt werden. Beispielsweise kann die Darstellung des Abstumpfungsprozesses aus einer Reihe einzelner charakteristischer Bilder bzw. Werkzeugzustandsmerkmale bestehen oder solche umfassen, die dann dem Benutzer visualisiert werden, beispielsweise auf einem Bildschirm, oder drahtlos auf einem Mobiltelefon oder einem Tablet-PC. Auf diese Weise kann der Benutzer den Zustand des Werkzeugs kontrollieren, ohne dass der Bearbeitungsvorgang bzw. der Produktionsprozess unterbrochen werden muss.

Vorgeschlagen wird auch, dass in dem Datensatz mit den dort vorhandenen Werten auch eine Werkzeug-ID verknüpft wird. Eine solche Werkzeug-Id wird beispielsweise nach einem Werkzeugwechsel, nachdem ein neues Werkzeug in die Werkzeugmaschine eingesetzt wurde, entweder eingegeben oder automatisch mittels einer entsprechenden Erfassungseinrichtung eingelesen und automatisch an eine Steuer- und/oder Regeleinrichtung der Werkzeugmaschine übertragen, wo sie dann künftig erstellten Datensätzen zugeordnet wird. Auf diese Weise kann die Werkzeugmaschine automatisch beispielsweise aus einer Datenbank, in der einer Mehrzahl von unterschiedlichen Werkzeug-IDs jeweilige Werkzeugeigenschaften zugeordnet ist, das entsprechende Werkzeug mit den entsprechenden Werkzeugeigenschaften auswählen und die entsprechenden Größen ebenfalls in der Prozessdatenbank ablegen.

Eigenschaft des Werkzeugs charakterisiert, und/oder eines vorgegebenen Werts der Größe, die eine Eigenschaft des zu bearbeitenden Werkstücks charakterisiert, und/oder eines vorgegebenen Werts des Qualitätsmerkmals, welches aus dem vorgesehenen Bearbeitungsvorgang an dem bearbeiteten Werkstück resultieren soll, mindestens ein optimaler Prozessparameter ermittelt wird. Auf diese Weise wird das eingesetzte Werkzeug optimal ausgenutzt, wodurch die Betriebskosten der Werkzeugmaschine reduziert werden.

Vorgeschlagen wird auch, dass der Prozessparameter mindestens einer aus der folgenden Gruppe ist: Drehgeschwindigkeit des Werkzeugs; Vorschubgeschwindigkeit des Werkzeugs; Verlauf einer Drehgeschwindigkeit des Werkzeugs; Verlauf einer Vorschubgeschwindigkeit des Werkzeugs; Arbeitsposition des Werkzeugs in Bezug auf das zu bearbeitende Werkstück; Arbeitsposition des zu bearbeitenden Werkstücks; eine Fertigungsreihenfolge von Schnittplänen in einem Arbeitsauftrag; eine Reihenfolge von Bearbeitungsaufträgen von unterschiedlichen Materialien. Bei letzterem können solche Materialien, welche empfindliche Oberflächen aufweisen, vorzugsweise mit einem eher neuen Werkzeug bearbeitet werden, wohingegen Materialien mit eher empfindlichen Oberflächen auch mit einem eher abgestumpften Werkzeug bearbeitet werden können. Diese Größen können mittels geeigneter Sensoren sehr einfach erfasst oder auf der Basis von vorgegebenen Steuersignalen, von Produktionsdaten und/oder eines Bearbeitungsprogramms für das Werkstück sehr einfach ermittelt bzw. vorgegeben werden.

Steuersignalen, von Produktionsdaten und/oder eines Bearbeitungsprogramms für das Werkstück sehr einfach ermittelt bzw. vorgegeben werden.

Ferner wird vorgeschlagen, dass für die Ermittlung des optimalen Prozessparameters mindestens ein Optimierungskriterium verwendet wird, welches mindestens eines aus der folgenden Gruppe ist: Produktivität, Qualitätssicherheit, Werkzeugkosten, Werkstückkosten, Auslastung der Werkzeugmaschine. Diese Optimierungskriterien gehören zu den in der Praxis wesentlichen Interessensfaktoren eines Betreibers einer Werkzeugmaschine.

In Weiterbildung hierzu wird vorgeschlagen, dass die ermittelten optimalen Prozessparameter automatisch für den vorgesehenen Bearbeitungsvorgang verwendet werden. Hierdurch wird der Benutzer der Werkzeugmaschine nochmals entlastet.

Eine Weiterbildung sieht ferner vor, dass anhand der ermittelten optimalen Prozessparameter von einem Benutzer eingegebene Prozessparameter überprüft und erforderlichenfalls automatisch angepasst werden. Hierdurch werden Fehlbedienungen durch den Benutzer vermieden und so die Effizienz, Qualität und/oder Produktivität der Werkzeugmaschine maximiert.

Ebenfalls zur Erhöhung der Betriebssicherheit der Werkzeugmaschine sowie zur Erhöhung der Anlageneffizienz Verlaufs des Werts der Größe, die den Zustand des Werkzeugs charakterisiert, eine Information an den Benutzer ausgegeben wird, insbesondere eine Warnung, eine Aufforderung für eine Prüfung des Werkzeugzustandes, eine Reinigung des Werkzeugs, einen Wechsel des Werkzeugs, und/oder eine Eignung des Werkzeugs bzw. des Zustands des Werkzeugs für eine bevorstehende Bearbeitungsaufgabe.

Nachfolgend wird eine Ausführungsform der Erfindung unter Bezugnahme auf die beigefügte Zeichnung erläutert. In der Zeichnung zeigen:
Figur 1 eine schematische Draufsicht auf eine Werkzeugmaschine in Form einer Plattenaufteilsäge;
Figur 2 eine Ansicht von vorne auf einen Sägewagen der Werkzeugmaschine von Figur 1; und
Figur 3 ein Flussdiagramm eines Verfahrens zum Betreiben der Werkzeugmaschine der Figuren 1 und 2.

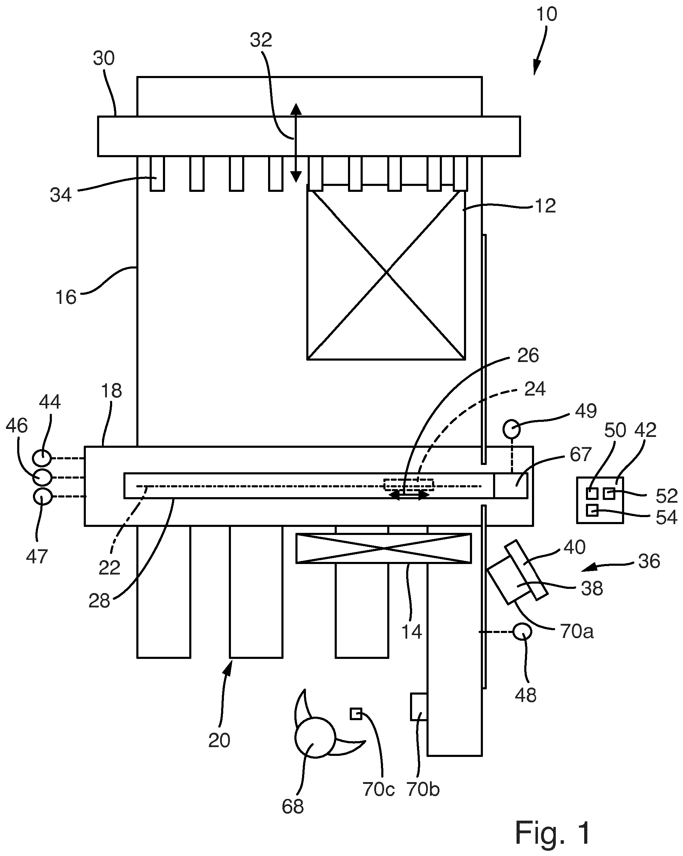

In Figur 1 trägt eine erste Werkzeugmaschine in Form einer Plattenbearbeitungsanlage insgesamt das Bezugszeichen 10. Sie ist vorliegend als Plattenaufteilsäge ausgebildet, mit der großformatige plattenförmige Werkstücke 12 oder Werkstückstapel ("Ausgangswerkstücke") durch Bearbeitungsvorgänge in Form von Sägevorgängen in kleinere Werkstücke 14 ("bearbeitete Werkstücke") aufgeteilt werden können. In anderen Ausführungsformen ist die Plattenbearbeitungsanlage nicht als Plattenaufteilsäge sondern als Fräseinrichtung und/oder als Bohreinrichtung zum Bearbeiten plattenförmiger Werkstücke ausgebildet. Derartige Anlagen werden auch als "Nestinganlagen" bezeichnet. Außerdem sind auch beliebige Kombinationen der genannten Typen von Plattenbearbeitungsanlagen möglich. Grundsätzlich sind aber auch ganz andere Arten von Werkzeugmaschinen denkbar, beispielsweise ganz allgemein Bohraggregate oder CNC-Fräsaggregate.

Die Plattenaufteilsäge 10 umfasst einen Zuführtisch 16, der üblicherweise als Rollentisch ausgebildet ist. An den Zuführtisch 16 schließt sich ein Maschinentisch 18 an, und an diesen schließt sich wieder ein Entnahmetisch 20 an, der in dem beispielhaft gezeigten Ausführungsbeispiel aus vier voneinander separaten Segmenten (ohne Bezugszeichen) besteht. Der Maschinentisch 18 und der Entnahmetisch 20 sind vorzugsweise als Luftkissentische ausgebildet.

In dem Maschinentisch 18 ist ein durch eine strichpunktierte Linie 22 angedeuteter Sägespalt vorhanden. Unterhalb von diesem ist ein Sägewagen 24 angeordnet, der entsprechend einem Doppelpfeil 26 bewegt werden kann. Oberhalb von dem Maschinentisch 18 ist ein Druckbalken 28 angeordnet. Dieser kann senkrecht zur Zeichnungsebene der Figur 1 bewegt werden. Im Bereich des Zuführtisches 16 ist ein Programmschieber 30 angeordnet, der entsprechend einem Doppelpfeil 32 bewegt werden kann. An dem Programmschieber 30 sind wiederum mehrere Spannzangen 34 befestigt, von denen aus Gründen der Übersichtlichkeit in Figur 1 nur eine mit einem Bezugszeichen versehen ist.

Zu der Plattenaufteilsäge 10 gehört ferner ein Bedienterminal 36, das vorliegend eine Tastatur 38 und einen Bildschirm 40 umfasst, sowie eine Steuer- und Regeleinrichtung 42, die nur symbolisch durch ein Quadrat angedeutet ist. Die Steuer- und Regeleinrichtung 42 steuert und regelt den Betrieb der Plattenaufteilsäge 10. Hierzu erhält sie Signale von verschiedenen Sensoreinrichtungen, darunter den symbolisch gezeichneten Sensoreinrichtungen 44, 46, 47, 48 und 49, welche jeweils wieder mehrere einzelne Sensoren umfassen können. Die Sensoreinrichtungen 44-49 werden weiter unten stärker im Detail erläutert werden. Angesteuert werden von der Steuer- und Regeleinrichtung 42 insbesondere der Programmschieber 30, die Spannzangen 34, der Sägewagen 24 mit den darauf befindlichen Sägen und der Druckbalken 28.

Die Steuer- und Regeleinrichtung 42 verfügt unter anderem über einen Prozessor 50 und einen Speicher 52. Bei der Steuer- und Regeleinrichtung 42 kann es sich beispielsweise um einen üblichen PC handeln. In dem Speicher 52 ist Software abgespeichert, welche zur Ausführung von unterschiedlichen Verfahren programmiert und ausgebildet ist. Eine durch ein entsprechendes Softwareprogramm gebildete Auswerteeinrichtung, auf die weiter unten noch Bezug genommen werden wird, ist mit dem Bezugszeichen 54 gekennzeichnet.

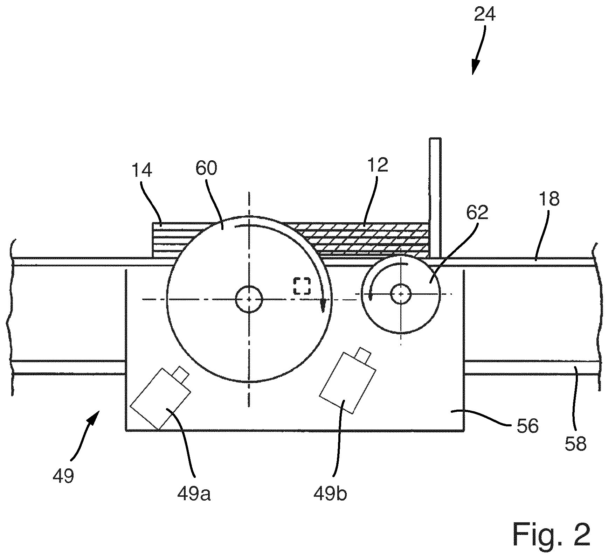

Der Sägewagen 24 sowie Teile des Maschinentisches 18 sind in Figur 2 etwas stärker detailliert gezeigt. Der Sägewagen 24 umfasst einen plattenförmigen Werkzeughalteabschnitt 56, der mittels eines nicht gezeigten Antriebsmotors auf Schienen 58, die an einer Stützstruktur (nicht dargestellt) des Maschinentisches 18 befestigt sind, gemäß dem Doppelpfeil 26 bewegbar ist. Der Werkzeughalteabschnitt 56 trägt zwei rotierende Werkzeuge in Form eines Hauptsägeblattes 60 und eines Vorritzsägeblattes 62. Sie sind in vertikaler Richtung bewegbar. Die beiden Antriebe für das Hauptsägeblatt 60 und das Vorritzsägeblatt 62 sind in Figur 2 nicht dargestellt. Sie werden ebenfalls von der Steuer- und Regeleinrichtung 42 so angesteuert, dass diese mit einer ganz bestimmten Drehgeschwindigkeit rotieren.

In einem normalen Betrieb wird der Werkstückstapel 12 an einem in Zuführrichtung hinteren Rand von den Spannzangen 34 des Programmschiebers 30 ergriffen und durch eine Bewegung des Programmschiebers 30 sukzessive dem Maschinentisch 18 bzw. dem Sägewagen 24 zugeführt, wo er durch eine Bewegung des Sägewagens 24 gemäß dem Doppelpfeil 26 durch einen Vorritzschnitt mittels des Vorritzsägeblatts 62 und einen anschließenden Hauptschnitt mittels des Hauptsägeblatts 60 aufgeteilt wird. Während der Bearbeitung durch das Hauptsägeblatt 60 und das Vorritzsägeblatt 62 wird der Werkstückstapel 12 durch den Druckbalken 28 gegen den Maschinentisch 18 gedrückt und hierdurch festgelegt. Eine Bedienperson 68 kann die aufgeteilten Werkstücke 14 am Entnahmetisch 20 entnehmen oder dort weiter verarbeiten, wie weiter unten noch dargelegt werden wird. Alternativ ist es möglich, jedoch nicht dargestellt, dass auch ein Roboter die fertigen Werkstücke entnehmen und abstapeln oder auf ein Abtransportband legen kann.

Die Sensoreinrichtung 44 dient ganz allgemein zur Erfassung des Werts mindestens einer Größe A, die den Bearbeitungsvorgang, vorliegend also den oben beschriebenen Sägevorgang, charakterisiert. Bei dieser Größe A kann es sich um eine Drehgeschwindigkeit des Werkzeugs, vorliegend also des Hauptsägeblatts 60 und/oder des Vorritzsägeblatts 62 handeln, und/oder um eine Vorschubgeschwindigkeit des Sägewagens 24 längs der durch den Doppelpfeil 26 gekennzeichneten Richtung und/oder um einen bei der Aufteilung von Werkstücken zurückgelegten Weg und/oder eine Position der Werkzeuge 60 und 62 zum Werkstück und/oder zueinander. Ebenfalls können die Größe A für den Sägevorgang relevante Maschineneinstellungen wie Druck des Druckbalkens und/oder eines Ausrichters sein.

Die Sensoreinrichtung 46 dient ganz allgemein zur Erfassung des Werts einer Größe B, die eine Eigenschaft des Werkzeugs, vorliegend also des Hauptsägeblatts 60 und/oder des Vorritzsägeblatts 62, charakterisiert. Bei dieser Größe B kann es sich um eine bisherige Betriebszeit des Hauptsägeblatts 60 und/oder des Vorritzsägeblatts 62 handeln. Alternativ oder zusätzlich kann durch die Sensoreinrichtung 46 auch die die Art des Werkzeugs charakterisierende Größe B, beispielsweise bei dem Hauptsägeblatt 60 und dem Vorritzsägeblatt 62 der Durchmesser, die Breite, die Anzahl der Sägezähne, die Form der Sägezähne, der Schliff der Sägezähne, etc. erfasst werden. Die das Werkzeug charakterisierende Größe B kann auch ein Schwingungsverhalten des Hauptsägeblatts 60 und/oder des Vorritzsägeblatts 62 sein. Eine das Werkzeug charakterisierende Größe B ist ferner auch der Hersteller des Werkzeugs sowie das Material, aus dem das Werkzeug hergestellt ist. Möglich ist auch, dass ganz allgemein eine Werkzeug-ID erfasst wird.

Hierzu kann das Werkzeug, also beispielsweise das Hauptsägeblatt 60 und das Vorritzsägeblatt 62, mit einem Barcode bedruckt sein, der eine oder mehrere der oben genannten Angaben als Information enthält. In diesem Fall würde die Sensoreinrichtung 46 einen Barcodeleser aufweisen, der vorzugsweise am Sägewagen 24 oder in einem Werkzeugwechselbereich angeordnet ist. Zur Erfassung der bisherigen Betriebszeit des Hauptsägeblatts 60 kann die Sensoreinrichtung 46 eine Auswertungseinheit umfassen, die die Betriebszeit seit dem letzten Werkzeugwechsel aufsummiert. Möglich ist auch, dass als Betriebszeit die Anzahl der Umdrehungen und/oder die Anzahl der Sägevorgänge und/oder ein Schnittweg einer Schneide verstanden wird.

Die Sensoreinrichtung 47 dient ganz allgemein zur Erfassung des Werts einer Größe C, die eine Eigenschaft des zu bearbeitenden Werkstücks 12 bzw. bearbeiteten Werkstücks 14 charakterisiert. Eine solche Größe C kann beispielsweise das Material des Werkstücks 12, 14 sein, eine Dicke des Werkstücks 12, 14, die Abmessungen des zu bearbeitenden Werkstücks 12 und/oder des bearbeiteten Werkstücks 14, Produktionsdaten des Werkstücks, beispielsweise ein Schnittplan und/oder eine Position des Werkstücks im Schnittplan, sowie eine Art des Werkstücks 12, 14 sein. Zu Letzterem gehört beispielsweise, ob das Werkstück mit einer Beschichtung versehen ist, und auch die Eigenschaften einer Beschichtung eines Werkstücks können die Art des Werkstücks definieren bzw. zu dieser Definition beitragen. Auch hier ist es möglich, dass diese Informationen in einem Barcode enthalten sind, der entweder auf ein Etikett, welches auf das Werkstück 12, 14 aufgeklebt ist, oder direkt auf das Werkstück 12, 14 aufgedruckt ist. In einem solchen Fall würde die Sensoreinrichtung 47 einen Barcodeleser umfassen, der beispielsweise im Bereich des Druckbalkens 28 angeordnet ist. Alternativ oder zusätzlich hierzu könnte die Sensoreinrichtung 47 auch eine Bilderkennungseinrichtung, beispielsweise in Form einer Videokamera, umfassen, mit der beispielsweise die Dicke sowie die Abmessungen erfasst werden können. Weiterhin verfügt die Sensoreinrichtung 47 über eine Schnittstelle zu einem Produktionssteuerungssystem, welche dazu dient, diese Daten zu erfassen.

Die Sensoreinrichtung 48 kann in der Praxis beispielsweise im Bereich des in Figur 1 ganz rechts angeordneten Segments des Entnahmetisches 20 angeordnet sein. Sie dient ganz allgemein zur Erfassung eines Qualitätsmerkmals D, welches aus dem Bearbeitungsvorgang an dem bearbeiteten Werkstück 14 resultiert. Bei diesem Qualitätsmerkmal D kann es sich beispielsweise um eine optische Qualität einer bearbeiteten Werkstückfläche handeln. Die bearbeitete Werkstückfläche ist vorliegend eine durch den Sägevorgang mittels des Hauptsägeblatts 60 hergestellte Schnittfläche. Alternativ oder zusätzlich ist ein solches Qualitätsmerkmal D eine Rauheit einer bearbeiteten Werkstückfläche, oder die Genauigkeit der Lage der bearbeiteten Werkstückfläche, vorliegend also die Genauigkeit der Lage der hergestellten Schnittfläche, oder, anders ausgedrückt: die Genauigkeit der tatsächlichen Abmessungen des bearbeiteten Werkstücks 14, beispielsweise die Längen der durch die Bearbeitung gebildeten Seiten sowie die dabei entstehenden Winkel.

Alternativ oder zusätzlich kommt als Qualitätsmerkmal D auch eine optische Qualität einer Werkstückfläche infrage, die zu der bearbeiteten Werkstückfläche benachbart ist. Diese benachbarte Werkstückfläche kann beispielsweise unmittelbar an eine Schnittkante angrenzen. Handelt es sich um ein beschichtetes Werkstück, können dort beispielsweise Ausreißer entstehen, also Beschädigungen der Beschichtung unmittelbar an der Schnittkante. Beispielsweise ist die Anzahl solcher Ausreißer pro Längeneinheit ein Qualitätsmerkmal. Als Sensoreinrichtung 48 kommt beispielsweise eine Bilderkennungseinrichtung in Form einer Videokamera infrage. Möglich ist aber auch, alternativ oder zusätzlich, der Einsatz beispielsweise von Ultraschallsensoren oder von anderen berührungslos arbeitenden Sensoreinrichtungen. Auch eine Schnittstelle zu einer externen und ebenfalls nicht dargestellten Qualitätsprüfeinrichtung ist denkbar.

Die Sensoreinrichtung 49 kann, wie aus Figur 2 hervorgeht, eine optische Vorrichtung sein, umfassend zwei Kameras 49a und 49b. Die Kamera 49a ist auf das Hauptsägeblatt 60 gerichtet, die Kamera 49b auf das Vorritzerblatt 62. Die Sensoreinrichtung 49 dient ganz allgemein zur Ermittlung einer den Zustand der Werkzeuge, also vorliegend beispielhaft des Hauptsägeblatts 60 und des Vorritzsägeblatts 62, charakterisierenden Größe E. Die beiden Kameras 49a und 49b können hierzu direkt am Werkzeughalteabschnitt 56 angebracht sein, so dass sie jederzeit die Werkzeuge 60 und 62 im Blick haben, wie dies in Figur 2 gezeigt ist.

Wie aus Figur 1 ersichtlich ist, kann die Sensoreinrichtung 49 aber auch in einem "Bahnhof" angeordnet sein, der in Figur 1 das Bezugszeichen 67 trägt und in Figur 1 rechts vom Sägespalt 22 unterhalb vom Maschinentisch 18 angeordnet ist. Der Bahnhof 67 bildet eine Position des Werkzeugs, in die das Werkzeug gebracht wird, wenn gerade kein Bearbeitungsvorgang stattfindet ("Nebenzeit"). Diese Position liegt üblicherweise außerhalb eines Bearbeitungsbereichs, vorliegend also des Sägespalts 22, der Werkzeugmaschine 10. Durch die Anordnung der optischen Vorrichtung 49 in einem solchen Bahnhof 67 ist eine zeitneutrale Inspektion der Werkzeuge 60 und 62 möglich, also eine Inspektion, die nicht zu einer Verzögerung der Bearbeitung des Werkstücks 12 führt. Die optische Vorrichtung 49 kann dabei ganz grundsätzlich sowohl radial als auch axial zum Werkzeug 60 bzw. 62 ausgerichtet sein.

Der Wert der Größe E, die einen Werkzeugzustand charakterisiert, ist mindestens einer aus der folgenden Gruppe: ein optisches Bild mindestens eines Bereichs des Werkzeugs 60 bzw. 62; ein Qualitätsmerkmal des Werkzeugs 60 bzw. 62, insbesondere einer Werkzeugschneide, beispielsweise eine Verschleißfase, eine Beschädigung einer Schneide, eine Schneidengeometrie, ein Schneidenwinkel, ein Schneidenprofil, eine Verschmutzung, eine Erwärmung, bzw. hieraus abgeleitete quantitative Merkmale bzw. Größen. Die von den beiden Kameras 49a und 49b erfassten Bilder können einer Bedienperson 68 beispielsweise an dem Bildschirm 40 des Bedienterminals 36 angezeigt werden. Sie können gegebenenfalls aber auch drahtlos beispielsweise auf ein Mobiltelefon oder einen Tablet-PC übertragen werden, welche die Bedienperson 68 bei sich trägt, so dass die Bedienperson 68 auch dann Informationen über den aktuellen Zustand der Werkzeuge 60, 62 erhält, wenn sie sich nicht unmittelbar bei dem Bedienterminal 36 befindet.

Möglich ist ferner, dass im Verlaufe der Benutzung der Werkzeuge 60 und 62 immer wieder von den beiden Kameras 49a und 49b Bilder erstellt werden, die dann beispielsweise in Form einer Bildsequenz bzw. eines Films der Bedienperson 68 zur Anzeige gebracht werden. Auf diese Weise erhält die Bedienperson 68 auf einfach verständliche Art und Weise eine Information über den Verschleißverlauf bzw. den Abstumpfungsvorgang der beiden Werkzeuge 60 und 62.

Die Werte der oben erwähnten Größen A, B, C, D und E können von der Bedienperson 68 auch manuell mittels der Tastatur 38 eingegeben werden, welche insoweit eine Eingabeeinrichtung 70a bildet. Dies gilt insbesondere für das oben erwähnte Qualitätsmerkmal D, welches an dem bearbeiteten Werkstück 14 aus dem Bearbeitungsvorgang resultiert. Dieses Qualitätsmerkmal D kann beispielsweise von der Bedienperson 68 bei dem auf dem Entnahmetisch 20 liegenden Werkstück 14 durch eine visuelle Begutachtung erfasst werden. Nach dieser Erfassung kann dann die Bedienperson 68 einen Wert für das entsprechende Qualitätsmerkmal D mittels der Tastatur 38 eingeben.

Im einfachsten Fall kann dieses Qualitätsmerkmal D dabei zwei Werte annehmen, beispielsweise "gut" sowie "nicht gut". In anderen, komplexeren Fällen kann das Qualitätsmerkmal D mehr als zwei Werte annehmen. Möglich sind beispielsweise Abstufungen in Form von Noten oder Punkten. Möglich ist auch, dass mehrere Qualitätsmerkmale D1, D2, D3, ... erfasst werden, und aus diesen beispielsweise nach einem vorgegebenen Gewichtungsschlüssel durch die Auswerteeinrichtung 54 der Steuer- und Regeleinrichtung 42 ein Gesamt-Qualitätsmerkmal D ermittelt wird.

Die Werkzeugmaschine 10 verfügt ferner über eine weitere Eingabeeinrichtung 70b am in Figur 1 äußersten rechten Segment des Entnahmetisches 20, mit der die Bedienperson einen Wert für das Qualitätsmerkmal D manuell eingeben kann. Diese Eingabeeinrichtung 70b ist ebenfalls mit der Steuer- und Regeleinrichtung 42 verbunden. Vorliegend besteht die Eingabeeinrichtung 70b einfach aus einer Taste (nicht separat dargestellt), bei deren Betätigung der Steuer- und Regeleinrichtung 42 ein bestimmter Wert des Qualitätsmerkmals D mitgeteilt wird, beispielsweise der Wert "nicht gut" (somit wird bei einer Betätigung der Eingabeeinrichtung 70b mitgeteilt, dass das Werkstück 14 als Ausschuss anzusehen ist).

Ferner umfasst die Eingabeeinrichtung alternativ oder zusätzlich ein Mikrofon, mit der die Bedienperson einen Wert für das Qualitätsmerkmal eingeben kann, und/oder ein drahtloses und tragbares Eingabegerät, insbesondere ein Mobiltelefon, und/oder eine Kamera. Insgesamt erkennt man aus der obigen Aufzählung, dass die Sensoreinrichtungen 44, 46, 47, 48 und 49 jeweils eine Mehrzahl oder gar eine Vielzahl von einzelnen Sensoren umfassen können, die jedoch in der Zeichnung nicht dargestellt sind. Beispielhaft ist in Figur 1 eine solche tragbare Eingabeeinrichtung 70c symbolisch dargestellt. Diese könnte zusätzlich auch einige der oben genannten Sensoreinrichtungen 44, 46, 47 und 48 oder Schnittstellen für diese enthalten.

Die mittels der Sensoreinrichtungen 44, 46, 47, 48 und 49 erfassten Größen A, B, C und E, bzw. die mittels der Tastatur 38 oder der Eingabeeinrichtung 70b oder der Eingabeeinrichtung 70c eingegebenen Werte D der Größen bzw. eingegebenen Qualitätsmerkmale werden dazu verwendet, um für jeden vergangenen Bearbeitungsvorgang in der Steuer- und Regeleinrichtung 42 einen Datensatz F ("Prozessdatensatz") zu erstellen und in dem Speicher 52 abzuspeichern, welcher den Wert des von der Bedienperson 68 bzw. der Sensoreinrichtung 48 erfassten Qualitätsmerkmals D mit den Werten der den Bearbeitungsvorgang charakterisierenden Größe A (Sensoreinrichtung 44), der die Eigenschaft des Werkzeugs der Werkzeugmaschine 10 charakterisierenden Größe B (Sensoreinrichtung 46), der die Eigenschaft des von der Werkzeugmaschine 10 durch den Bearbeitungsvorgang bearbeiteten Werkstücks 14 (Sensoreinrichtung 47) charakterisierenden Größe C und der den Zustand des Werkzeugs 60 bzw. 62 charakterisierenden Größe E verknüpft.

Im vorliegenden Fall besteht ein solcher Datensatz F also aus mindestens fünf einzelnen Werten der Größen A, B, C, D und E, gegebenenfalls aber auch aus mehr als fünf Werten. Grundsätzlich denkbar ist aber auch, dass ein solcher Datensatz F auch nur zwei Werte umfasst, wobei ein Wert für das aus dem Bearbeitungsvorgang an dem bearbeiteten Werkstück 14 resultierende Qualitätsmerkmal D sowie ein Wert der Größe E, die einen Zustand des Werkzeugs 60 bzw. 62 charakterisiert, in jedem Fall Teil des Datensatzes sind.

Nach einer Mehrzahl n von Bearbeitungsvorgängen liegen somit in dem Speicher 52 eine Mehrzahl n von Datensätzen F1, F2, F3, ..., Fn vor, wobei:
F1: A1, B1, C1, D1, E1
F2: A2, B2, C2, D2, E2
   ...
Fn: An, Bn, Cn, Dn, En

Aus dieser Mehrzahl von abgespeicherten Datensätze F1 ... Fn wird nun ein Prozessmodell ermittelt. Bei einem solchen Prozessmodell kann es sich beispielsweise um einen Algorithmus handeln, welcher die empirischen Zusammenhänge zwischen den Prozessparametern A, B, C und E und der erzielten Qualität D abbildet.

Je größer die Anzahl n der vorhandenen Prozessdatensätze F1 ... Fn ist, desto genauer kann der Algorithmus die besagten Zusammenhänge abbilden. Dies gestattet es dann, beispielsweise bei einem vorgegebenen Werkzeug 60, 62 und den entsprechenden Größen B, einem ermittelten Werkzeugzustand E und einer gewünschten Qualität D, insbesondere die Prozessparameter A vorab so einzustellen, dass bei dem dann mit diesen Prozessparametern A durchgeführten Bearbeitungsvorgang die gewünschte Qualität D erreicht wird. In diesem beispielhaften Fall wäre also die "gewünschte Qualität" die Zielgröße. Andere mögliche Zielgrößen bzw. Optimierungskriterien wären beispielsweise der Durchsatz bzw. die Produktivität bzw. die Auslastung der Werkzeugmaschine 10, also die Anzahl der bearbeiteten Werkstücke pro Zeiteinheit oder eine Bearbeitungsstrecke pro Zeiteinheit, oder die Werkzeugstandzeit, welche die Werkzeugkosten beeinflusst, also die Anzahl der Bearbeitungsvorgänge, bis das Werkzeug verschleißbedingt gewechselt werden muss. Auch die Werkstückkosten können ein solches Optimierungskriterium sein.

Zur Erreichung dieser Zielgröße wird mittels eines Optimierungsalgorithmus mindestens ein optimaler Prozessparameter ermittelt. Bei diesem kann es sich um mindestens einen aus der folgenden Gruppe handeln: Drehgeschwindigkeit des Werkzeugs 60, 62; Vorschubgeschwindigkeit des Werkzeugs 60, 62; Verlauf einer Drehgeschwindigkeit des Werkzeugs 60, 62; Verlauf einer Vorschubgeschwindigkeit des Werkzeugs 60, 62; Arbeitsposition des Werkzeugs 60,62 in Bezug auf das zu bearbeitende Werkstück 12; Arbeitsposition des zu bearbeitenden Werkstücks 12, sowie eine Fertigungsreihenfolge von Schnittplänen in einem Arbeitsauftrag. Die ermittelten optimalen Prozessparameter werden automatisch für den vorgesehenen Bearbeitungsvorgang verwendet. Anhand der ermittelten optimalen Prozessparameter A können die von einem Benutzer eingegebenen Prozessparameter überprüft und erforderlichenfalls automatisch angepasst werden.

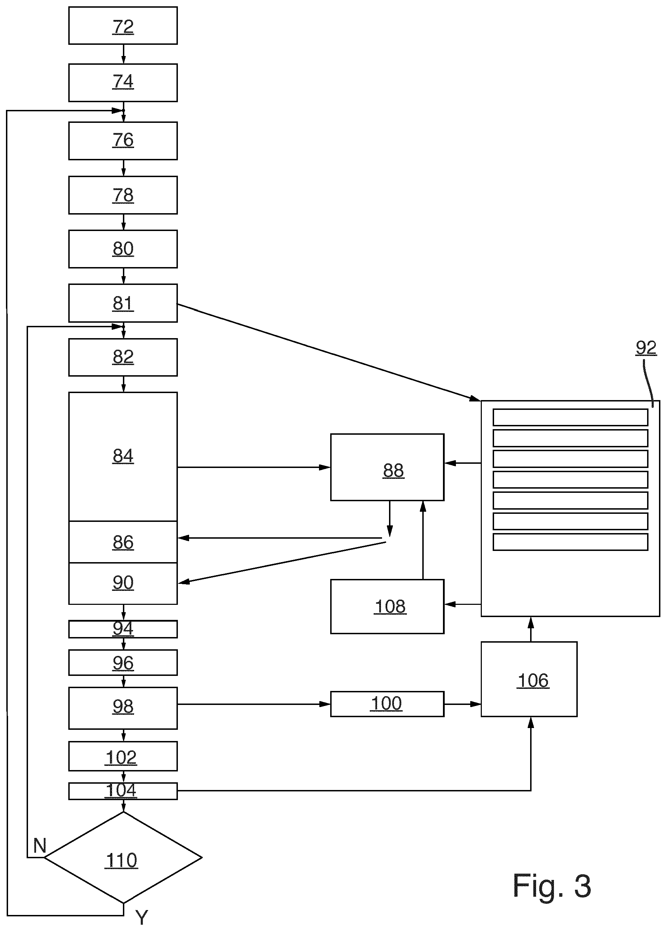

Das oben allgemein beschriebene Verfahren wird nun nochmals konkret unter Bezugnahme auf Figur 3, welche ein Funktionsschaltbild zeigt, erläutert.

Zunächst symbolisiert ein Funktionsblock 72 den Vorgang eines Werkzeugwechsels, also eines Austauschs des Hauptsägeblatts 60 und/oder des Vorritzsägeblatts 62. Nach einem solchen Werkzeugwechsel wird in einem Funktionsblock 74 die Werkzeug-ID des neuen Werkzeugs 60 und/oder 62 eingelesen, beispielsweise mittels der Sensoreinrichtung 46. Von der Sensoreinrichtung 49 wird ferner ein optisches Bild des neuen Werkzeugs 60 und/oder 62 erfasst, was durch den Funktionsblock 76 angedeutet ist. In einem Funktionsblock 78 wird das erfasste optische Bild des neuen Werkzeugs 60 bzw. 62 ausgewertet. Beispielsweise werden Qualitätsmerkmale des Werkzeugs 60 bzw. 62 erfasst. Zu diesen Qualitätsmerkmalen gehört ein Zustand einer Schneide des Hauptsägeblatts 60 bzw. des Vorritzsägeblatts 62, eine sogenannte Verschleißfase, eine Beschädigung einer Schneide, eine Schneidengeometrie, ein Schneidenwinkel, ein Schneidenprofil, eine Verschmutzung, etc. Hieraus wird ein charakteristisches Bild bzw. eine charakteristische Bildergruppe sowie quantitative Kennzahlen der oben erwähnten Qualitätsmerkmale für den aktuellen Zustand des jeweiligen Werkzeugs 60, 62 abgeleitet.

In einem Funktionsblock 80 wird eine Bildsequenz erstellt, aus der eine "Werkzeugabstumpfung" hervorgeht. Es versteht sich, dass bei einem ganz neuen und noch unbenutzten Werkzeug diese Bildsequenz nur aus einem einzigen Bild besteht und noch nicht aussagekräftig ist. Wie weiter unten noch dargelegt werden wird, wird dieser Funktionsblock 80 daher im Verlaufe der Benutzung der Werkzeuge 60, 62 wiederholt ausgeführt. Die Bildsequenz wird dabei mit der im Funktionsblock 74 eingelesenen Werkzeug-ID verknüpft. Das zuletzt im Funktionsblock 76 erstellte optische Bild wird im Funktionsblock 80 der möglicherweise dort bereits vorhandenen Bildsequenz hinzugefügt. In einem Funktionsblock 81 werden die bisher ermittelten bzw. erfassten Zustandsgrößen, welche den aktuellen Zustand des Werkzeugs 60 bzw. 62 charakterisieren, an eine Prozessdatenbank übertragen und in diese eingespeist, wie weiter unten noch dargelegt werden wird.

Ein weiterer Funktionsblock 82 führt zu einer Anzeige des aktuellen Zustands der Werkzeuge 60 bzw. 62 beispielsweise auf dem Bildschirm 40 des Bedienterminals 36. Liegen zu unterschiedlichen Zeitpunkten und nach unterschiedlichen Bearbeitungsvorgängen aufgenommene Bilder (Funktionsblock 76) vor, und liegt somit eine Bildsequenz vor (Funktionsblock 80), wird diese Bildsequenz im Funktionsblock 82 zur Anzeige gebracht.

Eine in dem Flussdiagramm der Figur 3 nicht durch einen Funktionsblock symbolisierte Fertigungsplanung gibt auf der Basis eines bestimmten Auftrags die Anzahl der herzustellenden Teile mit ihren jeweiligen und zum Teil unterschiedlichen Dimensionen sowie das Material, aus dem die Teile hergestellt werden sollen, vor. Hieraus ergibt sich dann ein Fertigungsauftrag, welcher ausgehend von einem Ausgangswerkstück (Bezugszeichen 12 in Figur 1) einen vorläufigen Schnittplan zur Aufteilung des Ausgangswerkstücks 12 mittels eines Bearbeitungsvorgangs durch das Hauptsägeblatt 60 und das Vorritzsägeblatt 62 definiert. Ferner wird durch diesen Fertigungsauftrag die Anzahl der gestapelten und insoweit gleichzeitig aufzuteilenden Ausgangswerkstücke 12 definiert, wodurch sich eine Höhe des zur Aufteilung vorgesehenen Stapels von Ausgangswerkstücken 12 ergibt. Der Fertigungsauftrag definiert auch das zu verwendende Material und eine gewünschte Qualität (SOLL-Qualitätsmerkmal) am bearbeiteten Werkstück (Bezugszeichen 14 in Figur 1), also einen Sollwert für die oben erwähnte Größe D.

Die entsprechenden Daten des Fertigungsauftrags werden dann an die erste Werkzeugmaschine 10, also die Plattenaufteilsäge, übermittelt, und zwar konkret an die Steuer- und Regeleinrichtung 42. Dort wird in einem Funktionsblock 84 "Konfiguration Säge" der vorläufige Schnittplan mittels einer Schnittplanoptimierung nach einem oder mehreren vorgegebenen Kriterien optimiert, beispielsweise im Hinblick darauf, möglichst wenig Abfall zu erzeugen. Es ergibt sich dann ein endgültiger Schnittplan.

Auch werden aus dem Fertigungsauftrag in die Konfiguration 84 der Säge die Daten zu der Pakethöhe (Höhe des Werkstückstapels, der aufgeteilt werden soll) und zum Material sowie zur gewünschten Qualität überspielt. In dem gleichen Funktionsblock 84 werden auch Daten betreffend die Werkzeuge, also betreffend das Hauptsägeblatt 60 und das Vorritzsägeblatt 62, der Werkzeugmaschine 10 bereitgestellt. Hierzu gehören eine oder mehrere der oben im Detail erwähnten "eine Eigenschaft des Werkzeugs charakterisierenden Größen B", sowie auch ein aktueller Werkzeugzustand.

Einige der für die Konfiguration der Werkzeugmaschine 10 im Funktionsblock 84 benötigten Prozessparameter werden automatisch durch die Sensoreinrichtungen 44-49 erfasst, andere werden wiederum von der Bedienperson 68 eingegeben. In einem noch zur Konfiguration 84 der Werkzeugmaschine 10 gehörenden Funktionsblock 86 werden die von der Bedienperson 68 eingegebenen Prozessparameter überprüft und gegebenenfalls angepasst. Hierzu werden Prozessparameter verwendet, die durch ein Prozessmodell (Funktionsblock 88) bereitgestellt werden.

Bei einem solchen Prozessmodell 88 kann es sich beispielsweise um einen Algorithmus handeln, der empirisch gewonnene Zusammenhänge zwischen Prozessparametern abbildet. Zu diesen Prozessparametern gehören beispielsweise das oben erwähnte, aus dem ersten Bearbeitungsvorgang an dem Werkstück resultierende Qualitätsmerkmal D, die den ersten Bearbeitungsvorgang charakterisierende Größe A (hierzu gehört beispielsweise auch die Bearbeitungsaufgabe), die eine Eigenschaft des Werkzeugs 60, 62 charakterisierende Größe B (beispielsweise Art des Werkzeugs, Werkzeugzustand), die eine Eigenschaft des Werkstücks 14 charakterisierende Größe C (beispielsweise das Material), sowie die einen Zustand des Werkzeugs 60 bzw. 62 charakterisierende Größe E (beispielsweise Werte, welche eine Verschleißfase, eine Beschädigung der Schneide, eine Schneidengeometrie, einen Schneidenwinkel, ein Schneidenprofil, eine Verschmutzung, etc. beschreiben bzw. charakterisieren). Auch gehört zu den Prozessparametern die Definition jener Größe oder jener Größen, welche bei dem anstehenden ersten Bearbeitungsvorgang optimal sein sollen (Optimierungsgrößen). Auf diese Weise ist es möglich, dass das Prozessmodell 88 dem Funktionsblock 86 jene Prozessparameter zur Verfügung stellt, bei denen die ausgewählte Optimierungsgröße bzw. die ausgewählten Optimierungsgrößen optimal ist bzw. sind.

Alternativ zum Funktionsblock 86 können die Prozessparameter in einem Funktionsblock 90 auch einfach insgesamt, ohne vorher von der Bedienperson eingegeben worden zu sein, durch das Prozessmodell 88 oder die dem Prozessmodell 88 vorgeschaltete und bereits oben allgemein erwähnte Prozessdatenbank 92 bereitgestellt werden. Auf diese Prozessdatenbank 92 wird weiter unten noch im Detail eingegangen werden.

An die Konfiguration 84 der Werkzeugmaschine 10 mit den Sub-Funktionsblöcken 86 und 90 schließt sich ein Funktionsblock 94 an, welcher den Bearbeitungsvorgang in der Werkzeugmaschine 10, vorliegend also die Aufteilung des Ausgangswerkstücks 12 in aufgeteilte Werkstücke 14, repräsentiert. Anschließend erfolgt in einem Funktionsblock 96 eine Kennzeichnung der durch den Bearbeitungsvorgang bearbeiteten Werkstücke 14. Hierzu wird beispielsweise ein in Figur 1 nicht gezeichnetes Etikettiergerät eingesetzt, welches ein Klebeetikett, auf dem ein das Werkstück 14 eindeutig identifizierendes Merkmal (Identifikator), beispielsweise ein Barcode, aufgebracht ist, auf das Werkstück 14 aufgeklebt. Dabei ist es möglich, dass die Kennzeichnung nicht nur das Werkstück 14 als solches identifiziert, sondern auch den konkreten Bearbeitungsvorgang (bspw. durch Datum und Uhrzeit), mit dem das Werkstück 14 hergestellt wurde. Alternativ hierzu ist es auch möglich, dass eine Verknüpfung des Identifikators des Werkstücks 14 mit dem speziellen Bearbeitungsvorgang, durch den das Werkstück 14 hergestellt wurde, beispielsweise in der oben erwähnten Prozessdatenbank 92 hergestellt wird bzw. vorliegt.

In einem Funktionsblock 98 wird ein Prozessdatensatz erstellt (entsprechend dem oben erwähnten Datensatz E), welcher für einen spezifischen ersten Bearbeitungsvorgang bzw. ein spezifisches bearbeitetes Werkstück 14 die Prozessdaten repräsentiert, also beispielsweise das tatsächlich eingesetzte Material des Werkstücks 14, die tatsächlichen Werkzeugdaten, den tatsächlichen Werkzeugzustand, den oben erwähnten Identifikator des Werkstücks 14, sowie möglicherweise weitere der oben erwähnten Prozessparameter. In einem Funktionsblock 100 erfolgt eine Rückmeldung des erstellten Prozessdatensatzes in Richtung der oben erwähnten Prozessdatenbank 92.

Nun erfolgt ein Schritt, welcher durch den Funktionsblock 102 repräsentiert wird: es wird nun der Wert jener Größe, die ein aus dem Bearbeitungsvorgang an dem Werkstück 14 resultierendes Qualitätsmerkmal charakterisiert, erfasst. Es wird also eine Ist-Qualität des durch den ersten Bearbeitungsvorgang erhaltenen Werkstücks 14 festgestellt. Wie oben bereits mehrfach erläutert wurde, kann dies durch eine Begutachtung durch die Bedienperson 68 geschehen, die das Ergebnis der Begutachtung dann beispielsweise an der Eingabeeinrichtung 70b oder an einer der anderen Eingabeeinrichtungen 70a oder 70c eingibt. Alternativ oder zusätzlich kann aber auch die Sensoreinrichtung 48 für die Feststellung der IST-Qualität eingesetzt werden. Der entsprechende Wert war oben durch den Buchstaben D bezeichnet worden.

In einem nachfolgenden Funktionsblock 104 wird der ermittelte Wert D in Richtung zur Prozessdatenbank 92 zurückgemeldet. Hierzu befindet sich zwischen dem Funktionsblock 100 (Rückmeldung des bei oder unmittelbar nach dem Bearbeitungsvorgang erstellten Prozessdatensatzes in Richtung zur Prozessdatenbank) und dem Funktionsblock 92 (Prozessdatenbank) ein Funktionsblock 106, der eine Erweiterung des im Funktionsblock 100 rückgemeldeten Prozessdatensatzes mit dem vom Funktionsblock 104 rückgemeldeten Qualitätsmerkmal repräsentiert. Es wird also der in 98 erstellte Prozessdatensatz um ein weiteres Prozessdatum, nämlich den in dem Funktionsblock 102 ermittelten Wert, der die erfasste Qualität repräsentiert, zeitversetzt ergänzt.

Dieser ergänzte bzw. komplettierte Prozessdatensatz wird dann in die Prozessdatenbank 92 eingespeist. Dort sind, wie bereits oben erläutert wurde, Prozessdatensätze (oben durch den Buchstaben F bezeichnet) abgespeichert, welche unterschiedliche Prozessgrößen miteinander verknüpfen, beispielsweise: Größen, die eine Eigenschaft des Werkstücks charakterisieren (obige Größe C), beispielsweise die Art bzw. der Typ des Werkstoffs, ob eine Beschichtung vorhanden ist, und wenn ja, welche Beschichtung, die Abmessungen des hergestellten Werkstücks 14 (Länge, Breite, Höhe), sowie der Identifikator des Werkstücks; Größen, die eine Eigenschaft des verwendeten Werkzeugs 60, 62, welches für den ersten Bearbeitungsvorgang eingesetzt wurde, charakterisieren (obige Größe B), beispielsweise ein Werkzeug-Identifikator, ein Durchmesser des Werkzeugs, eine Geometrie der Werkzeugschneiden, eine Anzahl von Schneidzähnen des Werkzeugs, sowie ein qualitativer Werkzeugzustand; Größen, welche eine Bearbeitungsaufgabe charakterisieren, wobei hierzu beispielsweise eine Höhe des aufzuteilenden Werkstückstapels gehört (Pakethöhe), und die Art der Bearbeitung, beispielsweise Trennschnitt, Kratzschnitt, etc. (obige Größe A); Größen, die den Bearbeitungsvorgang charakterisieren (Prozessparameter), also beispielsweise eine Vorschubgeschwindigkeit, eine Drehzahl, ein Überstand des Werkzeugs 60, 62 über das Werkstück 12 während des Bearbeitungsvorgangs (Sägeblattüberstand), etc. (ebenfalls obige Größe A); und eine Größe, die ein aus dem Bearbeitungsvorgang an dem Werkstück 74 resultierendes Qualitätsmerkmal charakterisiert (obige Größe D), beispielsweise eine Rauheit, Umfang und Anzahl von Kantenausbrüchen, eine allgemeine optische Qualitätsnote, etc.

Jene Merkmale, die einen aktuellen Zustand des Werkzeugs 60 bzw. 62 charakterisieren, waren, wie bereits oben erwähnt wurde, über den Funktionsblock 81 für den darauf folgenden Bearbeitungsvorgang an die Prozessdatenbank 92 übermittelt worden. Auch diese gehören zu dem jeweiligen und nach einem Bearbeitungsvorgang komplettierten Datensatz F in der Prozessdatenbank 92. Dabei kann der Zustand des Werkzeugs 60 bzw. 62 in der Prozessdatenbank 92 auf unterschiedliche Arten und Weisen berücksichtigt werden. Beispielsweise kann der Werkzeugzustand durch unmittelbare direkte Merkmale charakterisiert sein, beispielsweise die bereits oben erwähnte Verschleißfase, eine Beschädigung der Schneide, eine Abnutzung der Schneiden, etc., und/oder durch mittelbare indirekte Merkmale charakterisiert sein, beispielsweise einen zurückgelegten Schnittweg oder eine Addition der Längen der geschnittenen Werkstücke, etc.

Die in der Prozessdatenbank 92 gespeicherten Prozessdatensätze F werden, wie oben ebenfalls bereits ausgeführt wurde, im Funktionsblock 88 dazu verwendet, einen Algorithmus, nämlich das oben erwähnte Prozessmodell, zu erstellen. Ferner werden die Prozessdatensätze in einem Funktionsblock 108 dazu verwendet, gegebenenfalls überhaupt erst ein Prozessmodell zu erstellen, welches dann im Funktionsblock 88 bereitgestellt wird, oder ein bereits vorhandenes Prozessmodell um neue Prozessparameter zu erweitern.

Nach einem Bearbeitungsvorgang wird in einem Funktionsblock 110 geprüft, ob eine zeitneutrale Erfassung des Zustands des Werkzeugs 60 bzw. 62 möglich ist (obige Größe E). Dies ist beispielsweise dann der Fall, wenn der Sägewagen 24 in den Bahnhof 67 bewegt wurde. Ist die Antwort im Funktionsblock 110 JA, erfolgt ein Rücksprung vor den Funktionsblock 76. Ist die Antwort im Funktionsblock 110 dagegen NEIN, erfolgt ein Rücksprung vor den Funktionsblock 82.

Es versteht sich, dass im Laufe der Bearbeitung des Ausgangswerkstücks 10 in den Bearbeitungsvorgängen eine anwachsende Zahl von Prozessdatensätzen F erzeugt und im Funktionsblock 92 (Prozessdatenbank) abgespeichert werden. Durch die anwachsende Zahl von Prozessdatensätzen kann das Prozessmodell im Funktionsblock 88 im Laufe der ersten Bearbeitungen verfeinert und angepasst bzw. aktualisiert werden, wodurch eine immer bessere Übereinstimmung der gewünschten Optimierungsgröße mit der entsprechenden tatsächlichen Größe erreicht wird.

Im Funktionsschaubild der Figur 3 nicht gezeigt, jedoch grundsätzlich möglich ist auch, dass auf der Basis des aktuellen Werts der Größe E, die den Zustand des Werkzeugs 60, 62 charakterisiert, und/oder auf der Basis eines Verlaufs des Werts der Größe E, die den Zustand des Werkzeugs 60, 62 charakterisiert, eine Information an den Benutzer 68 ausgegeben wird, insbesondere eine Warnung, eine Aufforderung für eine Prüfung des Zustands des Werkzeugs 60, 62, eine Reinigung des Werkzeugs 60, 62, und/oder einen Wechsel des Werkzeugs 60, 62, und/oder Information bezüglich einer Eignung des Werkzeugs bzw. des Zustands des Werkzeugs für die bevorstehende Bearbeitungsaufgabe.

Bei der oben beschriebenen Werkzeugmaschine 10 besteht das Werkzeug aus einem Hauptsägeblatt 60 und einem Vorritzsägeblatt 62. Es versteht sich jedoch, dass das oben beschriebene Verfahren auch bei anderen, nicht gezeigten Werkzeugmaschinen eingesetzt werden kann, die andere Arten von Werkzeugen aufweisen, und die auch eine andere Anzahl von Werkzeugen aufweisen, beispielsweise nur ein einziges Werkzeug oder mehr als zwei unterschiedliche Werkzeuge.

Ferner wird bei der oben konkret beschriebenen Ausführungsform der Zustand des Werkzeugs 60, 62 mittels einer optischen Vorrichtung 49, bestehend aus zwei Kameras 49a und 49b erfasst. Grundsätzlich sind aber auch andere Vorrichtungen denkbar, die den Zustand des Werkzeugs 60, 62 erfassen, insbesondere andere berührungslose Vorrichtungen, wie Lasersensoren, Ultraschallsensoren und/oder Infrarotsensoren.

## Patentansprüche

1. Verfahren zum Bearbeiten von plattenförmigen Werkstücken (12) durch eine Plattenaufteilanlage (10), bei dem ein Ausgangswerkstück (12) mittels eines Werkzeugs (60, 62) einer Werkzeugmaschine (10) bearbeitet wird und bei dem an dem bearbeiteten Werkstück (14) ein Wert eines aus dem Bearbeitungsvorgang resultierenden **Qualitätsmerkmals** (D) ermittelt wird, wobei ein Wert einer Größe (E), die einen **Zustand des Werkzeugs** (60, 62) charakterisiert, während des Bearbeitungsvorgangs und/oder vor und/oder nach dem Bearbeitungsvorgang ermittelt wird, und dass ein **Datensatz** (F) erstellt und in einem Speicher (52) abgespeichert wird, der mindestens den Wert des Qualitätsmerkmals (D) und den Wert der Größe (E), die den Zustand des Werkzeugs (60, 62) charakterisiert, miteinander verknüpft,
**dadurch gekennzeichnet, dass** das Verfahren ferner folgende Schritte umfasst:
a. Ermitteln oder Erfassen eines Werts einer Größe (A), die den Bearbeitungsvorgang charakterisiert, und des Werts einer Größe (B), die eine Eigenschaft des Werkzeugs (60, 62), welches für den Bearbeitungsvorgang eingesetzt wurde, charakterisiert, und des Werts einer Größe (C), die eine Eigenschaft des Werkstücks (14) charakterisiert;
b. Erstellen und Abspeichern des Datensatzes (F) derart, dass er zusätzlich den Wert der Größe (A), die den Bearbeitungsvorgang charakterisiert, und den Wert der Größe (B), die eine Eigenschaft des Werkzeugs (60, 62) charakterisiert, und den Wert der Größe (C), die eine Eigenschaft des Werkstücks (12, 14) charakterisiert, mit dem Wert des aus dem Bearbeitungsvorgang an dem bearbeiteten Werkstück (14) resultierenden Qualitätsmerkmals (D) und dem Wert der Größe (E), die einen Zustand des Werkzeugs (60, 62) charakterisiert, verknüpft
c. Abspeichern einer Mehrzahl von Datensätzen (F) in dem Speicher (52);
d. Ermitteln eines Prozessmodells aus der Mehrzahl von abgespeicherten Datensätze (F);
e. Ermitteln mindestens eines optimalen Prozessparameters, auf der Basis des Prozessmodells, auf der Basis des ermittelten Werts der Größe (E), die den aktuellen Zustand des Werkzeugs (60, 62) charakterisiert, und eines vorgegebenen Werts der Größe (A), die einen vorgesehenen Bearbeitungsvorgang charakterisiert,
wobei der Prozessparameter mindestens einer aus der folgenden Gruppe ist: Drehgeschwindigkeit des Werkzeugs (60, 62); Vorschubgeschwindigkeit des Werkzeugs (60, 62); Verlauf einer Drehgeschwindigkeit des Werkzeugs (60, 62); Verlauf einer Vorschubgeschwindigkeit des Werkzeugs (60, 62);
Arbeitsposition des Werkzeugs (60,62) in Bezug auf das zu bearbeitende Werkstück (12); Arbeitsposition des zu bearbeitenden Werkstücks (12); eine Fertigungsreihenfolge von Schnittplänen in einem Arbeitsauftrag; eine Reihenfolge von Bearbeitungsaufträgen von unterschiedlichen Materialien,
wobei die ermittelten optimalen Prozessparameter automatisch für den vorgesehenen Bearbeitungsvorgang verwendet werden.

2. Verfahren nach Anspruch1, **dadurch gekennzeichnet, dass** der Wert der Größe (E), die einen Zustand des Werkzeugs (60, 62) charakterisiert, mindestens einer ist aus der folgenden Gruppe: ein optisches Bild mindestens eines Bereichs des Werkzeugs (60, 62); ein Qualitätsmerkmal des Werkzeugs (60, 62), insbesondere einer Werkzeugschneide, beispielsweise eine Verschleißfase, eine Beschädigung einer Schneide, eine Schneidengeometrie, ein Schneidenwinkel, ein Schneidenprofil, eine Verschmutzung bzw. davon abgeleitete quantitative Größen.

3. Verfahren nach mindestens einem der vorhergehenden Ansprüche, **dadurch gekennzeichnet, dass** das aus dem Bearbeitungsvorgang resultierende Qualitätsmerkmal (D) mindestens eines aus der folgenden Gruppe ist:
optische Qualität der bearbeiten Werkstückfläche;
Rauheit der bearbeiteten Werkstückfläche; optische Qualität einer zur bearbeiteten Werkstückfläche benachbarten Werkstückfläche; optische Qualität einer durch die bearbeitete Werkstückfläche und eine benachbarte Werkstückfläche gebildeten Kante;
Genauigkeit der Lage der bearbeiteten Werkstückfläche.

4. Verfahren nach einem der vorhergehenden Ansprüche, **dadurch gekennzeichnet, dass** die den Bearbeitungsvorgang charakterisierende Größe (A) mindestens eine aus der folgenden Gruppe ist:
Drehgeschwindigkeit des Werkzeugs (60, 62);
Vorschubgeschwindigkeit des Werkzeugs (60, 62) oder des bearbeiteten Werkstücks; Verlauf einer Drehgeschwindigkeit des Werkzeugs (60, 62); Verlauf einer Vorschubgeschwindigkeit des Werkzeugs (60, 62);
Arbeitsposition des Werkzeugs (60, 62) in Bezug auf das zu bearbeitende Werkstück (12); Arbeitsposition des zu bearbeitenden Werkstücks (12);
Bearbeitungsaufgabe; Höhe eines beim Bearbeitungsvorgang bearbeiteten Werkstückstapels (12); eine Fertigungsreihenfolge von Schnittplänen in einem Arbeitsauftrag; Qualitätsanforderungen an das Werkstück.

5. Verfahren nach einem der vorhergehenden Ansprüche, **dadurch gekennzeichnet, dass** die eine Eigenschaft des Werkzeugs (60, 62) charakterisierende Größe (B) mindestens eine aus der folgenden Gruppe ist:
bisherige Betriebszeit des Werkzeugs (60, 62); Art des Werkzeugs (60, 62); Hersteller des Werkzeugs (60, 62);
Schwingungsverhalten des Werkzeugs (60, 62); Verlauf eines Schwingungsverhaltens des Werkzeugs (60, 62);
Werkzeuggeometrie; Anzahl von Schneidzähnen des Werkzeugs (60, 62).

6. Verfahren nach einem der vorhergehenden Ansprüche, **dadurch gekennzeichnet, dass** die eine Eigenschaft des Werkstücks (12, 14) charakterisierende Größe mindestens eine aus der folgenden Gruppe ist: Material des Werkstücks (12, 14); Dicke des Werkstücks (12, 14); Abmessungen des Werkstücks (12, 14); Art des Werkstücks (12, 14); Produktionsdaten des Werkstücks (12, 14).

7. Verfahren nach Anspruch 1, **dadurch gekennzeichnet, dass** das Qualitätsmerkmal (D) oder der Wert der Größe (A), die den Bearbeitungsvorgang charakterisiert oder der Wert der Größe (B), die eine Eigenschaft des Werkzeugs charakterisiert oder der Wert der Größe (C), die eine Eigenschaft des Werkstücks charakterisiert, durch eine Bedienperson (68) mittels einer Eingabeeinrichtung (40, 70a-c) eingegeben oder mittels einer Bilderkennungseinrichtung oder mittels einer vorzugsweise berührungslosen Sensoreinrichtung (44, 46, 47, 48) erfasst wird.

8. Verfahren nach wenigstens einem der vorhergehenden Ansprüche, **dadurch gekennzeichnet, dass** ein aktueller Zustand des Werkzeugs (60, 62) angezeigt wird, insbesondere in Form eines aktuellen optischen Bilds mindestens eines Bereichs des Werkzeugs (60, 62).

9. Verfahren nach wenigstens einem der vorhergehenden Ansprüche, **dadurch gekennzeichnet, dass** ein Verlauf des Zustands des Werkzeugs (60, 62) angezeigt wird, insbesondere als eine Filmsequenz von erfassten optischen Bildern mindestens eines Bereichs des Werkzeugs (60, 62).

10. Verfahren nach wenigstens einem der vorhergehenden Ansprüche, **dadurch gekennzeichnet, dass** in dem Datensatz (F) mit den dort vorhandenen Werten auch eine Werkzeug-ID verknüpft wird.

11. Verfahren nach wenigstens einem der vorhergehenden Ansprüche, dass für die Ermittlung des optimalen Prozessparameters mindestens ein Optimierungskriterium verwendet wird, welches mindestens eines aus der folgenden Gruppe ist: Produktivität, Qualitätssicherheit, Werkzeugkosten, Werkstückkosten, Auslastung der Werkzeugmaschine.

12. Verfahren nach wenigstens einem der vorhergehenden Ansprüche, **dadurch gekennzeichnet, dass** anhand der ermittelten optimalen Prozessparameter von einem Benutzer (68) eingegebene Prozessparameter überprüft und erforderlichenfalls automatisch angepasst werden.

13. Verfahren nach wenigstens einem der vorhergehenden Ansprüche, **dadurch gekennzeichnet, dass** der Wert der Größe (E), die den Zustand des Werkzeugs (60, 62) charakterisiert, während einer Nebenzeit eines Bearbeitungsvorgangs ermittelt wird.

14. Verfahren nach wenigstens einem der vorhergehenden Ansprüche, **dadurch gekennzeichnet, dass** der Wert der Größe (E), die den Zustand des Werkzeugs (60, 62) charakterisiert, mittels einer optischen Vorrichtung, welche beispielsweise eine Kamera, insbesondere eine Infrarotkamera (49a, 49b), umfasst, ermittelt wird.

15. Verfahren nach wenigstens einem der vorhergehenden Ansprüche, **dadurch gekennzeichnet, dass** auf der Basis des aktuellen Werts der Größe (E), die den Zustand des Werkzeugs (60, 62) charakterisiert, oder auf der Basis eines Verlaufs des Werts der Größe (E), die den Zustand des Werkzeugs (60, 62) charakterisiert, eine Information an den Benutzer (68) ausgegeben wird.

16. Plattenaufteilanlage (10), **dadurch gekennzeichnet, dass** sie eine Steuer- und Regeleinrichtung (42) mit einem Prozessor (50) und einem Speicher (52) umfasst, welche zur Ausführung eines Verfahrens nach einem der vorhergehenden Ansprüche ausgebildet ist.

17. Plattenaufteilanlage (10) nach Anspruch 16, **dadurch gekennzeichnet, dass** sie eine berührungslose, insbesondere optische Vorrichtung (49) zur Erfassung eines Werts der Größe, die den Zustand des Werkzeugs (60, 62) charakterisiert, umfasst, insbesondere eine Kamera (49a, 49b).

18. Plattenaufteilanlage (10) nach Anspruch 17, **dadurch gekennzeichnet, dass** die optische Vorrichtung (49) in einem Bahnhof (67) angeordnet ist, in dem das Werkzeug (60, 62) anordenbar ist, wenn es gerade kein Werkstück (12) bearbeitet.

## Claims

1. Method for machining panel-like workpieces (12) by means of a panel dividing system (10), in which an initial workpiece (12) is machined by means of a tool (60, 62) of a machine tool (10) and in which a value of a quality feature (D) resulting from the machining process is determined on the machined workpiece (14), a value of a quantity (E) that characterizes a condition of the tool (60, 62) being determined during the machining process and/or before and/or after the machining process, and that a data set (F) is created and stored in a memory (52) and interlinks at least the value of the quality feature (D) and the value of the quantity (E) that characterizes the state of the tool (60, 62),
**characterized in that** the method further comprises the following steps:
a. determining or capturing a value of a quantity (A) that characterizes the machining process, and the value of a quantity (B) that characterizes a property of the tool (60, 62) which was used for the machining process, and the value of a quantity (C) that characterizes a property of the workpiece (14);
b. creating and storing the data set (F) such that it additionally links the value of the quantity (A) that characterizes the machining process, and the value of the quantity (B) that characterizes a property of the tool (60, 62), and the value of the quantity (C) that characterizes a property of the workpiece (12, 14) with the value of the quality feature (D) resulting from the machining process on the machined workpiece (14) and the value of the quantity (E) that characterizes a state of the tool (60, 62);
c. storing a plurality of data sets (F) in the memory (52);
d. determining a process model from the plurality of stored data sets (F);
e. determining at least one optimal process parameter, based on the process model, based on the determined value of the quantity (E) that characterizes the current state of the tool (60, 62), and a predetermined value of the quantity (A) that characterizes an intended machining process,
the process parameter being at least one from the following group: rotary speed of the tool (60, 62); feed rate of the tool (60, 62); progression of a rotary speed of the tool (60, 62); progression of a feed rate of the tool (60, 62); working position of the tool (60, 62) in relation to the workpiece to be machined (12); working position of the workpiece to be machined (12);
a manufacturing sequence of cutting plans in a work order; a sequence of machining orders of different materials;
the determined optimal process parameters being automatically used for the intended machining process.

2. Method according to claim 1, **characterized in that** the value of the quantity (E) that characterizes a state of the tool (60, 62) is at least one from the following group: an optical image of at least one region of the tool (60, 62); a quality feature of the tool (60, 62), in particular of a tool cutting edge, for example a wear chamfer, damage to a cutting edge, a cutting edge geometry, a cutting edge angle, a cutting edge profile, contamination or quantitative quantities derived therefrom.

3. Method according to at least one of the preceding claims, **characterized in that** the quality feature (D) resulting from the machining process is at least one from the following group: visual quality of the machined workpiece surface; roughness of the machined workpiece surface; visual quality of a workpiece surface adjacent to the machined workpiece surface; visual quality of an edge formed by the machined workpiece surface and an adjacent workpiece surface; accuracy of the position of the machined workpiece surface.

4. Method according to any of the preceding claims, **characterized in that** the quantity (A) characterizing the machining process is at least one from the following group: rotary speed of the tool (60, 62); feed rate of the tool (60, 62) or of the workpiece being machined; progression of a rotary speed of the tool (60, 62); progression of a feed rate of the tool (60, 62); working position of the tool (60, 62) in relation to the workpiece to be machined (12); working position of the workpiece to be machined (12); machining task; height of a workpiece stack (12) being machined during the machining process; a manufacturing sequence of cutting plans in a work order; quality requirements for the workpiece.

5. Method according to any of the preceding claims, **characterized in that** the quantity (B) characterizing a property of the tool (60, 62) is at least one from the following group: previous operating time of the tool (60, 62); tool (60, 62) type; tool (60, 62) manufacturer; vibration behavior of the tool (60, 62); progression of vibration behavior of the tool (60, 62); tool geometry; number of cutting teeth of the tool (60, 62).

6. Method according to any of the preceding claims, **characterized in that** the quantity characterizing a property of the workpiece (12, 14) is at least one from the following group: workpiece (12, 14) material; workpiece (12, 14) thickness; workpiece (12, 14) dimensions; workpiece (12, 14) type; workpiece (12, 14) production data.

7. Method according to claim 1, **characterized in that** the quality feature (D) or the value of the quantity (A) that characterizes the machining process or the value of the quantity (B) that characterizes a property of the tool, or the value of the quantity (C) that characterizes a property of the workpiece is input by an operator (68) by means of an input device (40, 70a-c) or is captured by means of an image recognition device or by means of a preferably contactless sensor device (44, 46, 47, 48).

8. Method according to at least one of the preceding claims, **characterized in that** a current state of the tool (60, 62) is displayed, in particular in the form of a current optical image of at least one region of the tool (60, 62).

9. Method according to at least one of the preceding claims, **characterized in that** a progression of the state of the tool (60, 62) is displayed, in particular as a film sequence of captured optical images of at least one region of the tool (60, 62).

10. Method according to at least one of the preceding claims, **characterized in that**, in the data set (F), a tool ID is also linked to the values present therein.

11. Method according to at least one of the preceding claims, that at least one optimization criterion is used to determine the optimal process parameter, which optimization criterion is at least one from the following group: productivity, quality assurance, tooling costs, workpiece costs, machine tool utilization.

12. Method according to at least one of the preceding claims, **characterized in that**, based on the determined optimal process parameters, process parameters input by a user (68) are checked and automatically adjusted if necessary.

13. Method according to at least one of the preceding claims, **characterized in that** the value of the quantity (E) that characterizes the state of the tool (60, 62) is determined during a non-productive time of a machining process.

14. Method according to at least one of the preceding claims, **characterized in that** the value of the quantity (E) that characterizes the state of the tool (60, 62) is determined by means of an optical device which includes, for example, a camera, in particular an infrared camera (49a, 49b).

15. Method according to at least one of the preceding claims, **characterized in that**, based on the current value of the quantity (E) that characterizes the state of the tool (60, 62), or based on a progression of the value of the quantity (E) that characterizes the state of the tool (60, 62), information is output to the user (68).

16. Panel dividing system (10), **characterized in that** it comprises an open-loop and closed-loop control device (42), which has a processor (50) and a memory (52) and is configured to carry out a method according to any of the preceding claims.

17. Panel dividing system (10) according to claim 16, **characterized in that** it comprises a contactless, in particular optical, device (49), in particular a camera (49a, 49b), for capturing a value of the quantity that characterizes the state of the tool (60, 62).

18. Panel dividing system (10) according to claim 17, **characterized in that** the optical device (49) is arranged in a station (67) in which the tool (60, 62) can be arranged when it is not currently processing a workpiece (12).

## Revendications

1. Procédé pour l'usinage de pièces (12) en forme de panneaux par une installation de découpage de panneaux (10), dans lequel une pièce initiale (12) est usinée au moyen d'un outil (60, 62) d'une machine-outil (10) et dans lequel une valeur d'une caractéristique de qualité (D) résultant du processus d'usinage est déterminée sur la pièce (14) usinée, dans lequel une valeur d'une grandeur (E) qui caractérise un état de l'outil (60, 62) est déterminée pendant le processus d'usinage et/ou avant et/ou après le processus d'usinage, et en ce qu'un jeu de données (F) est créé et mémorisé dans une mémoire (52) qui associe entre elles au moins la valeur de la caractéristique de qualité (D) et la valeur de la grandeur (E) qui caractérise l'état de l'outil (60, 62),
**caractérisé en ce que** le procédé comprend en outre les étapes suivantes:
a. détermination ou détection d'une valeur d'une grandeur (A) qui caractérise le processus d'usinage et de la valeur d'une grandeur (B) qui caractérise une propriété de l'outil (60, 62) qui a été utilisé pour le processus d'usinage, et de la valeur d'une grandeur (C) qui caractérise une propriété de la pièce (14);
b. création et mémorisation du jeu de données (F) de telle sorte qu'il associe en outre la valeur de la grandeur (A) qui caractérise le processus d'usinage et la valeur de la grandeur (B) qui caractérise une propriété de l'outil (60, 62) et la valeur de la grandeur (C) qui caractérise une propriété de la pièce (12, 14) à la valeur de la caractéristique de qualité (D) résultant du processus d'usinage sur la pièce (14) usinée et à la valeur de la grandeur (E) qui caractérise un état de l'outil (60, 62)
c. mémorisation d'une pluralité de jeux de données (F) dans la mémoire (52);
d. détermination d'un modèle de processus à partir de la pluralité de jeux de données (F) mémorisés;
e. détermination d'au moins un paramètre de processus optimal, sur la base du modèle de processus, sur la base de la valeur déterminée de la grandeur (E) qui caractérise l'état actuel de l'outil (60, 62), et d'une valeur prédéfinie de la grandeur (A) qui caractérise un processus d'usinage prévu,
dans lequel le paramètre de processus est au moins un paramètre choisi dans le groupe suivant: vitesse de rotation de l'outil (60, 62); vitesse d'avance de l'outil (60, 62); évolution d'une vitesse de rotation de l'outil (60, 62); évolution d'une vitesse d'avance de l'outil (60, 62); position de travail de l'outil (60, 62) par rapport à la pièce (12) à usiner; position de travail de la pièce (12) à usiner; une séquence de fabrication de plans de coupe dans un ordre de travail; une séquence d'ordres d'usinage de différents matériaux,
dans lequel les paramètres de processus optimaux déterminés sont utilisés automatiquement pour le processus d'usinage prévu.

2. Procédé selon la revendication 1, **caractérisé en ce que** la valeur de la grandeur (E) qui caractérise un état de l'outil (60, 62) est au moins une grandeur choisie dans le groupe suivant: une image optique d'au moins une zone de l'outil (60, 62); une caractéristique de qualité de l'outil (60, 62), en particulier d'un tranchant d'outil, par exemple un chanfrein d'usure, un endommagement d'un tranchant, une géométrie de tranchant, un angle de tranchant, un profil de tranchant, un encrassement ou des grandeurs quantitatives qui en dérivent.

3. Procédé selon au moins l'une des revendications précédentes, **caractérisé en ce que** la caractéristique de qualité (D) résultant du processus d'usinage est au moins une caractéristique choisie dans le groupe suivant: qualité optique de la surface de pièce usinée; rugosité de la surface de pièce usinée; qualité optique d'une surface de pièce adjacente à la surface de pièce usinée; qualité optique d'une arête formée par la surface de pièce usinée et une surface de pièce adjacente; précision de la position de la surface de pièce usinée.

4. Procédé selon l'une des revendications précédentes, **caractérisé en ce que** la grandeur (A) caractérisant le processus d'usinage est au moins une grandeur choisie dans le groupe suivant: vitesse de rotation de l'outil (60, 62); vitesse d'avance de l'outil (60, 62) ou de la pièce usinée; évolution d'une vitesse de rotation de l'outil (60, 62); évolution d'une vitesse d'avance de l'outil (60, 62); position de travail de l'outil (60, 62) par rapport à la pièce (12) à usiner; position de travail de la pièce (12) à usiner; tâche d'usinage; hauteur d'un empilement de pièces (12) usinées lors du processus d'usinage; une séquence de fabrication de plans de coupe dans un ordre de travail; exigences de qualité pour la pièce.

5. Procédé selon l'une des revendications précédentes, **caractérisé en ce que** la grandeur (B) caractérisant une propriété de l'outil (60, 62) est au moins une grandeur choisie dans le groupe suivant: durée de fonctionnement antérieure de l'outil (60, 62); type d'outil (60, 62); fabricant de l'outil (60, 62); comportement vibratoire de l'outil (60, 62); évolution d'un comportement vibratoire de l'outil (60, 62); géométrie de l'outil; nombre de dents de coupe de l'outil (60, 62).

6. Procédé selon l'une des revendications précédentes, **caractérisé en ce que** la grandeur caractérisant une propriété de la pièce (12, 14) est au moins une grandeur choisie dans le groupe suivant: matériau de la pièce (12, 14); épaisseur de la pièce (12, 14); dimensions de la pièce (12, 14); type de pièce (12, 14); données de production de la pièce (12, 14).

7. Procédé selon la revendication 1, **caractérisé en ce que** la caractéristique de qualité (D) ou la valeur de la grandeur (A) qui caractérise le processus d'usinage ou la valeur de la grandeur (B) qui caractérise une propriété de l'outil ou la valeur de la grandeur (C) qui caractérise une propriété de la pièce est entrée par un opérateur (68) au moyen d'un appareil d'entrée (40, 70a-c) ou est détectée au moyen d'un appareil de reconnaissance d'images ou au moyen d'un appareil formant capteur (44, 46, 47, 48) de préférence sans contact.

8. Procédé selon au moins l'une des revendications précédentes, **caractérisé en ce qu'**un état actuel de l'outil (60, 62) est affiché, en particulier sous la forme d'une image optique actuelle d'au moins une zone de l'outil (60, 62).

9. Procédé selon au moins l'une des revendications précédentes, **caractérisé en ce qu'**une évolution de l'état de l'outil (60, 62) est affichée, en particulier sous la forme d'une séquence de film d'images optiques détectées d'au moins une zone de l'outil (60, 62).

10. Procédé selon au moins l'une des revendications précédentes, **caractérisé en ce que**, dans le jeu de données (F), un identifiant d'outil est également associé aux valeurs présentes dans ledit jeu de données.

11. Procédé selon au moins l'une des revendications précédentes, en ce que, pour la détermination du paramètre de processus optimal, au moins un critère d'optimisation est utilisé, lequel est au moins un critère choisi dans le groupe suivant: productivité, assurance de la qualité, coûts de l'outil, coûts de la pièce, utilisation de la machine-outil.

12. Procédé selon au moins l'une des revendications précédentes, **caractérisé en ce que**, à l'aide des paramètres de processus optimaux déterminés, des paramètres de processus entrés par un utilisateur (68) sont vérifiés et, si nécessaire, adaptés automatiquement.

13. Procédé selon au moins l'une des revendications précédentes, **caractérisé en ce que** la valeur de la grandeur (E) qui caractérise l'état de l'outil (60, 62) est déterminée pendant un temps mort d'un processus d'usinage.

14. Procédé selon au moins l'une des revendications précédentes, **caractérisé en ce que** la valeur de la grandeur (E) qui caractérise l'état de l'outil (60, 62) est déterminée au moyen d'un dispositif optique comprenant par exemple une caméra, en particulier une caméra infrarouge (49a, 49b).

15. Procédé selon au moins l'une des revendications précédentes, **caractérisé en ce que** des informations sont délivrées à l'utilisateur (68) sur la base de la valeur actuelle de la grandeur (E) qui caractérise l'état de l'outil (60, 62) ou sur la base d'une évolution de la valeur de la grandeur (E) qui caractérise l'état de l'outil (60, 62).

16. Installation de découpage de panneaux (10), **caractérisée en ce qu'**elle comprend un appareil de commande et de régulation (42) comportant un processeur (50) et une mémoire (52), lequel est réalisé pour mettre en œuvre un procédé selon l'une des revendications précédentes.

17. Installation de découpage de panneaux (10) selon la revendication 16, **caractérisée en ce qu'**elle comprend un dispositif (49) sans contact, en particulier optique, pour la détection d'une valeur de la grandeur qui caractérise l'état de l'outil (60, 62), en particulier une caméra (49a, 49b).

18. Installation de découpage de panneaux (10) selon la revendication 17, **caractérisée en ce que** le dispositif optique (49) est disposé dans un poste (67) dans lequel l'outil (60, 62) peut être disposé lorsqu'il n'est pas en train d'usiner une pièce (12).
